# EUROPEAN PATENT APPLICATION

(11) **EP 4 645 645 A1**
(43) Date of publication of application: **05.11.2025**
(21) Application number: 25743953.9
(22) Date of filing: 18.02.2025
(51) Int. Cl.: H02J 7/00, G06F 1/16, H02M 3/156, H02M 3/158

(54) **POWER SUPPLY CIRCUIT AND ELECTRONIC DEVICE**

(30) Priority: 04.03.2024 CN 202410238839
(71) Applicant: Honor Device Co., Ltd., Shenzhen, Guangdong 518040 (CN)
(72) Inventor: JI, Qing, Shenzhen, Guangdong 518040 (CN); MA, Chengyu, Shenzhen, Guangdong 518040 (CN); WANG, Yong, Shenzhen, Guangdong 518040 (CN)
(74) Representative: MERH-IP Matias Erny Reichl Hoffmann Patentanwälte PartG mbB
(86) International application number: PCT/CN2025/077858
(87) International publication number: WO 2025/185440

(57) **Abstract**

This application provides a power supply circuit and an electronic device, to extend a battery life of the electronic device. The power supply circuit includes: a battery module, where the battery module includes at least one power supply branch, each power supply branch includes a first battery cell and a second battery cell, and a negative electrode of the first battery cell in each power supply branch is connected to a positive electrode of the second battery cell; a first voltage converter, where an input terminal thereof is connected to a positive electrode of the first battery cell, an output terminal thereof is connected to a first load, and the first voltage converter is configured to convert a first battery voltage into a first operating voltage; and a second voltage converter, where an input terminal thereof is connected to the positive electrode of the second battery cell, an output terminal thereof is connected to a second load, the second voltage converter is configured to convert a second battery voltage into a second operating voltage, and a first absolute difference between the second battery voltage and the second operating voltage is less than a second absolute difference between the first battery voltage and the second operating voltage.

## Description

This application claims priority to Chinese Patent Application No. 202410238839.2, filed with the China National Intellectual Property Administration on March 4, 2024 and entitled "POWER SUPPLY CIRCUIT AND ELECTRONIC DEVICE", which is incorporated herein by reference in its entirety.

### TECHNICAL FIELD

This application relates to the field of electronic device technologies, and in particular, to a power supply circuit and an electronic device.

### BACKGROUND

For an electronic device such as a laptop, to ensure normal operation of the electronic device, a battery module in the electronic device needs to provide electrical energy support for each component of the electronic device.

In a current stage, electrical energy utilization efficiency of a power supply solution of the electronic device such as a laptop is relatively low, which affects a battery life of the electronic device.

### SUMMARY

To resolve the foregoing technical problem, this application provides a power supply circuit and an electronic device, to extend a battery life of the electronic device.

According to a first aspect, this application provides a power supply circuit, applied to an electronic device, and the power supply circuit includes a battery module, a first voltage converter, and a second voltage converter. The battery module includes at least one power supply branch, each power supply branch includes a first battery cell and a second battery cell, a negative electrode of the first battery cell in each power supply branch is connected to a positive electrode of the second battery cell, a positive electrode of the first battery cell is configured to output a first battery voltage, and the positive electrode of the second battery cell is configured to output a second battery voltage; an input terminal of the first voltage converter is connected to the positive electrode of the first battery cell, an output terminal of the first voltage converter is connected to a first load, and the first voltage converter is configured to convert the first battery voltage into a first operating voltage, and output the first operating voltage to the first load; and an input terminal of the second voltage converter is connected to the positive electrode of the second battery cell, an output terminal of the second voltage converter is connected to a second load, and the second voltage converter is configured to convert the second battery voltage into a second operating voltage, and output the second operating voltage to the second load, where a first absolute difference between the second battery voltage and the second operating voltage is less than a second absolute difference between the first battery voltage and the second operating voltage.

By using the power supply circuit, a difference of voltages at two terminals of the second voltage converter is the first absolute difference. In comparison with a solution in which the input terminal of the second voltage converter is connected to the positive electrode of the first battery cell (in this case, a difference of voltages at the two terminals of the second voltage converter is the second absolute difference), because the first absolute difference is less than the second absolute difference, and working efficiency of the second voltage converter is inversely proportional to the difference of the voltages at the two terminals of the second voltage converter, by using the power supply circuit in this embodiment of this application, working efficiency of the second voltage converter is improved, voltage losses of the second voltage converter on the battery module are reduced, voltage utilization of the battery module is improved, and a battery life of the electronic device is extended.

For example, the battery module may include m power supply branches, and each power supply branch includes n battery cells connected in series, where m is an integer greater than or equal to 1, and n is an integer greater than or equal to 2. On each branch, a negative electrode of an ith battery cell is connected to a positive electrode of an (i+1)th battery cell, where i is any positive integer less than n. In addition, in a case in which m is greater than or equal to 2, a positive electrode of a jth battery cell on each branch is connected in series, where j is any positive integer less than or equal to n.

In an example, one branch in the battery module may include only the first battery cell and the second battery cell. For example, the battery module may include one branch, and the branch includes two battery cells of the first battery cell P1-the second battery cell P2 connected in series, namely, "2-series 1-parallel". For another example, the battery module may include two branches, and one branch includes two battery cells of the first battery cell P1-the second battery cell P2 connected in series, namely, "2-series 2-parallel".

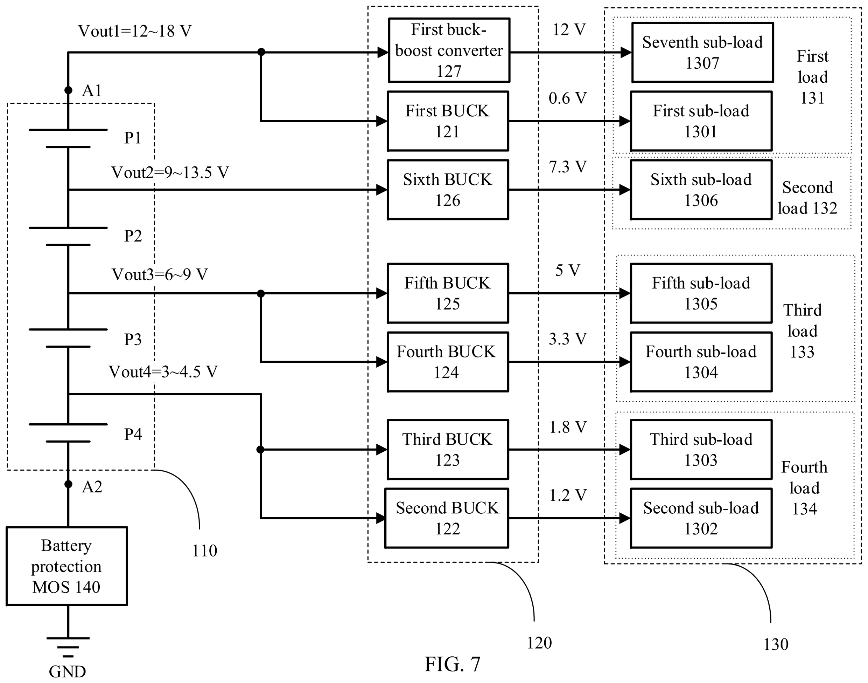

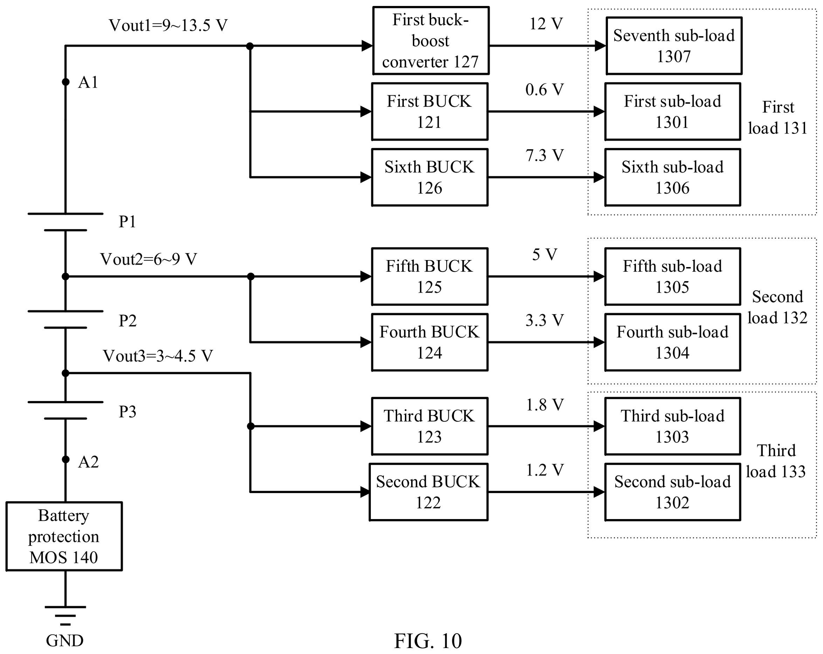

In another example, one branch of the battery module may alternatively include another battery cell different from the first battery cell and the second battery cell. For example, as shown in FIG. 7, one branch includes four battery cells of a first battery cell P1-a fourth battery cell P4 connected in series, namely, "4-series 1-parallel". For another example, as shown in FIG. 10, the battery module may include one branch, and the branch includes three battery cells connected in series, a first battery cell P1-a third battery cell P3, namely, "3-series 1-parallel".

For example, the first voltage converter may be a voltage converter connected to the positive electrode of the first battery cell, for example, may be a BUCK, a BOOST, or a buck-boost converter (BUCK-BOOST). For example, in the electronic device shown in FIG. 7, the first voltage converter may include the first buck-boost converter 127 and the first BUCK 121. For another example, the first voltage converter may be the first BOOST 128, the first BUCK 121, the second buck-boost converter 129, the fourth BUCK 124, and the fifth BUCK 125 in the electronic device shown in FIG. 8 and FIG. 9. For another example, the first voltage converter may be the sixth BUCK 126, the first buck-boost converter 127, and the first BUCK 121 in the electronic device shown in FIG. 10.

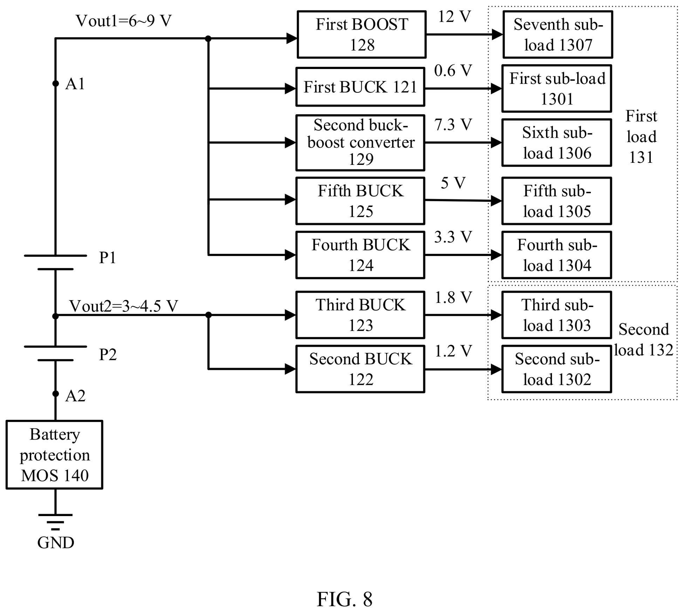

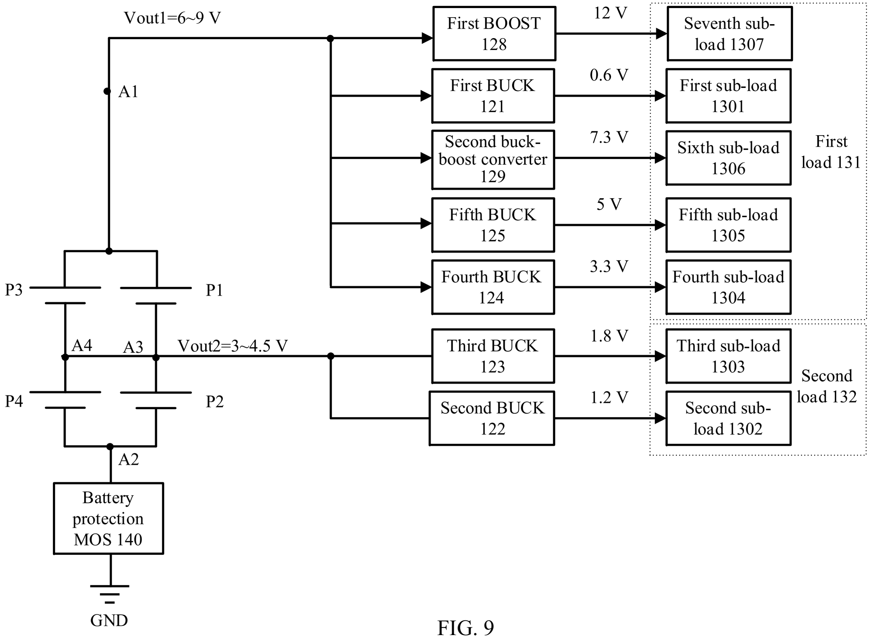

For example, the second voltage converter may be a voltage converter connected to the positive electrode of the second battery cell, for example, the sixth BUCK 126 in FIG. 7, the second BUCK 122 and the third BUCK 123 in FIG. 8 and FIG. 9; and the fourth BUCK 124 and the fifth BUCK 125 in FIG. 10.

For example, the first load may be an electrical load connected to the first voltage converter, for example, the first load 131 in this application.

For example, the second load may be an electrical load connected to the second voltage converter, for example, the second load 132 in this application.

For example, the first battery voltage may be a voltage of the positive electrode of the first battery cell, for example, the first battery voltage Vout1 in this application. The second battery voltage may be a voltage of the positive electrode of the second battery cell, for example, the second battery voltage Vout2 in this application. In a case in which one branch includes two battery cells connected in series, if a voltage change range of one battery cell is 3 V~4.5 V, a voltage value range of the first battery voltage Vout1 may be 6 V~9 V, and a voltage change range of the second battery voltage Vout2 may be 3 V~4.5 V. In a case in which one branch includes three battery cells connected in series, if a voltage change range of one battery cell is 3 V~4.5 V, a voltage value range of the first battery voltage Vout1 may be 9 V~13.5 V, and a voltage change range of the second battery voltage Vout2 may be 6 V~9 V. In a case in which one branch includes four battery cells connected in series, if a voltage change range of one battery cell is 3 V~4.5 V, a voltage value range of the first battery voltage Vout1 may be 12 V~18 V, and a voltage change range of the second battery voltage Vout2 may be 9 V~13.5 V.

For example, the second voltage converter may include a first buck converter, and the second operating voltage may be less than a minimum voltage value of the second battery voltage. For example, in a case in which a voltage change range of the second battery voltage Vout2 is 3 V~4.5 V, the second operating voltage may be less than 3 V.

For example, the first voltage converter may be determined according to a magnitude relationship between an operating voltage of a connected first load and a first battery voltage. For example, in a case in which the operating voltage of the first load is greater than a maximum voltage value of the first battery voltage, the first voltage converter may be a boost converter (BOOST). In a case in which the operating voltage of the first load is less than a minimum voltage value of the first battery voltage, the first voltage converter may be a buck converter (BUCK). In a case in which the operating voltage of the first load is greater than or equal to the minimum value of the first battery voltage and less than or equal to the maximum value of the first battery voltage, the first voltage converter may be a buck-boost converter (BUCK-BOOST).

For the first load 131, if the operating voltage of the first load 131 is less than the minimum voltage value of the first battery voltage, the first load 131 may be an electrical load whose operating voltage is less than the minimum voltage value of the first battery voltage and greater than or equal to the minimum voltage value of the second battery voltage. Alternatively, the first load 131 may alternatively be a load with a large peak current and a high dynamic response, for example, a CPU core, a GPU core, or an NPU core. A load current of this type of load is high and a power supply voltage thereof is low.

For example, the electronic device may be a terminal device. For example, the electronic device may be a laptop, for example, a thin and light laptop using a power supply solution of "2-series 1-parallel" or "2-series 2-parallel".

According to the first aspect, each power supply branch further includes a third battery cell, where a positive electrode of the third battery cell is connected to a negative electrode of the second battery cell, and the positive electrode of the third battery cell is configured to output a third battery voltage; and the power supply circuit further includes: a third voltage converter, where an input terminal of the third voltage converter is connected to the positive electrode of the third battery cell, an output terminal of the third voltage converter is connected to a third load, and the third voltage converter is configured to convert the third battery voltage into a third operating voltage, and output the third operating voltage to the third load, where a third absolute difference between the third battery voltage and the third operating voltage is less than a fourth absolute difference between the first battery voltage and the third operating voltage.

In this way, when the electronic device includes the third voltage converter, in a manner of connecting the input terminal of the third voltage converter to the positive electrode of the third battery cell, a difference of voltages at the input terminal of the third voltage converter and the output terminal thereof can be further reduced, working efficiency of the third voltage converter can be improved, and a battery life of the electronic device can be further extended.

For example, the third battery cell may be the third battery cell P3 in FIG. 10. Correspondingly, the third voltage converter may include the second BUCK 122 and the third BUCK 123. A change range of the third battery voltage may be 3~4.5 V. For another example, the third battery cell may be the third battery cell P3 in FIG. 7. Correspondingly, the third voltage converter may include the fourth BUCK 124 and the fifth BUCK 125. A change range of the third battery voltage may be 6~9 V.

For example, the electronic device may be a laptop, for example, a laptop using a power supply solution of "3-series 1-parallel", and the laptop may be a laptop other than a thin and light laptop and a high-performance laptop. For example, a performance requirement of the laptop may be between that of the thin and light laptop and that of the high-performance laptop.

According to the first aspect or any implementation of the first aspect, the second voltage converter includes a first buck converter, and the second operating voltage is less than the minimum voltage value of the second battery voltage and greater than or equal to a minimum voltage value of the third battery voltage; and
the third voltage converter includes a second buck converter, and the third operating voltage is less than the minimum voltage value of the third battery voltage.

In this way, operating voltages can be provided for the second load and the third load by using the buck converters, thereby reducing circuit costs. In addition, the first buck converter and the second buck converter may be connected to battery cells being capable of maximizing working efficiency of the first buck converter and the second buck converter, thereby further improving working efficiency of the first buck converter and the second buck converter, and further extending a battery life of the electronic device.

For example, the electronic device shown in FIG. 10 is used as an example. The first buck converter may be a buck converter connected to the positive electrode of the second battery cell, for example, the fourth BUCK 124 and the fifth BUCK 125. The second buck converter may be a buck converter connected to the positive electrode of the third battery cell, for example, the second BUCK 122 and the third BUCK 123. In this case, a value range of the second operating voltage is [3 V, 6 V), and a value range of the third operating voltage is (0, 3 V).

According to the first aspect or any implementation of the first aspect, each power supply branch further includes a fourth battery cell, where a positive electrode of the fourth battery cell is connected to a negative electrode of the third battery cell, and the positive electrode of the fourth battery cell is configured to input a fourth battery voltage; and
the power supply circuit further includes:
a fourth voltage converter, where an input terminal of the fourth voltage converter is connected to the positive electrode of the fourth battery cell, an output terminal of the fourth voltage converter is connected to a fourth load, and the fourth voltage converter is configured to convert the fourth battery voltage into a fourth operating voltage, and output the fourth operating voltage to the fourth load, where
a sixth absolute difference between the fourth battery voltage and the fourth operating voltage is less than a seventh absolute difference between the first battery voltage and the fourth battery voltage.

In this way, when the electronic device includes the fourth voltage converter, in a manner of connecting the input terminal of the fourth voltage converter to the positive electrode of the fourth battery cell, a difference of voltages at the input terminal of the fourth voltage converter and the output terminal thereof can be further reduced, working efficiency of the fourth voltage converter can be improved, and a battery life of the electronic device can be further extended.

For example, the electronic device may be a high-performance laptop, and the high-performance laptop meets a performance requirement by using a power supply solution of "4-series 1-parallel".

For example, the electronic device shown in FIG. 7 is used as an example. The fourth battery cell may be the fourth battery cell P4, a change range of the fourth battery voltage Vout4 may be 3~4.5 V, and the fourth voltage converter may include the second BUCK 122 and the third BUCK 123.

According to the first aspect or any implementation of the first aspect, the second voltage converter includes a first buck converter, and the second operating voltage is less than the minimum voltage value of the second battery voltage and greater than or equal to a minimum voltage value of the third battery voltage; the third voltage converter includes a second buck converter, and the third operating voltage is less than the minimum voltage value of the third battery voltage and greater than or equal to a minimum voltage value of the fourth battery voltage; and the fourth voltage converter includes a third buck converter, and the fourth operating voltage is less than the minimum voltage value of the fourth battery voltage.

For example, the electronic device shown in FIG. 7 is used as an example. In this case, a value range of the second operating voltage may be [6 V, 9 V), a value range of the third operating voltage is [3 V, 6 V), and a value range of the fourth operating voltage is (0, 3 V).

According to the first aspect or any implementation of the first aspect, the first load includes a first sub-load, the second load includes a second sub-load, and both an operating voltage of the first sub-load and an operating voltage of the second sub-load are less than the second battery voltage; and a load current of the first sub-load is greater than a load current of the second sub-load, and/or a dynamic response rate of the first sub-load is greater than a dynamic response rate of the second sub-load.

In this way, a load with a high dynamic response requirement rate and a large load current can be connected to the positive electrode of the first battery cell by using the first voltage converter. Because a voltage of the first battery cell is relatively high, impedance heat losses of an input path of the first voltage converter and a voltage drop caused by path impedance can be reduced, thereby extending a battery life and reducing a design difficulty of a power supply design solution.

For example, the first sub-load may be a load with a high peak current and a high dynamic response, for example, a CPU core, a GPU core, and an NPU core.

According to the first aspect or any implementation of the first aspect, the first load includes a first sub-load, the first voltage converter includes a first voltage conversion element connected to the first sub-load, and the power supply circuit further includes: a first switch, where a first connection terminal of the first switch is connected to the positive electrode of the first battery cell, and a second connection terminal of the first switch is connected to an input terminal of the first voltage conversion element; and a second switch, where a first connection terminal of the second switch is connected to the positive electrode of the second battery cell, and a second connection terminal of the second switch is connected to the input terminal of the first voltage conversion element, where when the first sub-load is in a first state, the first switch is turned on, and the second switch is turned off; or when the first sub-load is in a second state, the first switch is turned off, and the second switch is turned on.

In this way, when the first sub-load is in the first state, that is, when a performance requirement is relatively high, a performance requirement of the first sub-load can be met by connecting the first sub-load to the positive electrode the first battery cell. When the first sub-load is in the second state, that is, when a performance requirement is relatively low, by connecting the first sub-load to the positive electrode of the second battery cell, a voltage difference of the first voltage conversion element is reduced, and working efficiency of the first voltage conversion element is improved, thereby further extending a battery life while meeting the performance requirement of the first sub-load.

For example, the first sub-load may be the first sub-load 1301, and the first voltage conversion element may be the first BUCK 121.

For example, in a case in which the battery module further includes the third battery cell, the first connection terminal of the second switch is connected to the positive electrode of the third battery cell. For example, in the electronic device shown in FIG. 10, the input terminal of the first BUCK 121 is connected to the positive electrode of the third battery cell P3.

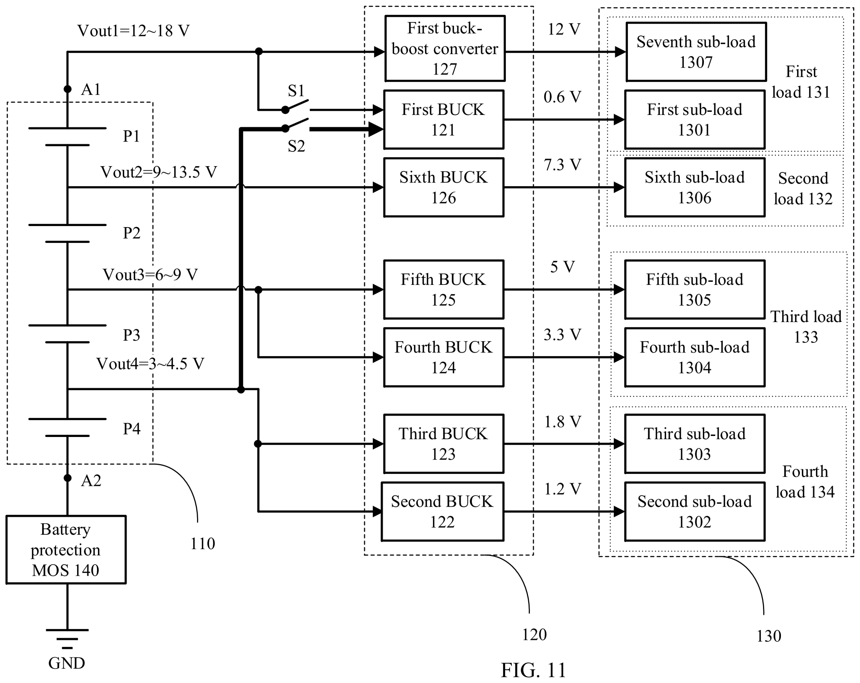

For example, in a case in which the power supply circuit further includes the fourth battery cell, the first connection terminal of the second switch is connected to the positive electrode of the fourth battery cell. For example, in the electronic device shown in FIG. 11, a first connection terminal of the second switch S2 is connected to the positive electrode of the fourth battery cell P4.

For example, the first state may be a state in which a load is relatively high, for example, a large-scale task is running, or a plurality of tasks are running simultaneously. The second state may be a state in which a load is relatively light, for example, a small quantity of tasks are running, or no task is running.

According to the first aspect or any implementation of the first aspect, the power supply circuit further includes an equalization circuit, and the equalization circuit is separately connected to the first battery cell and the second battery cell, to perform electricity quantity equalization on the first battery cell and the second battery cell.

In this way, by using the equalization circuit, an electricity quantity difference between battery cells due to different connected loads can be reduced, thereby improving battery use safety.

For example, the equalization circuit may be an active equalization circuit. Compared with a passive equalization circuit, the active equalization circuit has low electrical energy losses and low heat losses for the battery cell, a large equalization current, and a high equalization speed, thereby improving equalization quality and reducing electricity quantity losses.

According to the first aspect or any implementation of the first aspect, the equalization circuit includes: a first control switch, where a first connection terminal of the first control switch is connected to the positive electrode of the first battery cell, and a second connection terminal of the first control switch is connected to a first connection terminal of a third control switch; a second control switch, where a first connection terminal of the second control switch is connected to the negative electrode of the first battery cell, and a second connection terminal of the second control switch is connected to a first connection terminal of a fourth control switch; the third control switch, where a second connection terminal of the third control switch is connected to a second connection terminal of a seventh control switch; the fourth control switch, where a second connection terminal of the fourth control switch is grounded; a fifth control switch, where a first connection terminal of the fifth control switch is connected to the positive electrode of the second battery cell, and a second connection terminal of the fifth control switch is connected to a first connection terminal of the seventh control switch; a sixth control switch, where a first connection terminal of the sixth control switch is connected to the negative electrode of the second battery cell, and a second connection terminal of the sixth control switch is connected to a first connection terminal of an eighth control switch; the seventh control switch; the eighth control switch, where a second connection terminal of the eighth control switch is grounded; a first equalization capacitor, where a first terminal of the first equalization capacitor is separately connected to the second connection terminal of the first control switch and the first connection terminal of the third control switch, and a second terminal of the first equalization capacitor is separately connected to the second connection terminal of the second control switch and the first connection terminal of the fourth control switch; and a second equalization capacitor, where a first terminal of the second equalization capacitor is separately connected to the second connection terminal of the fifth control switch and the first connection terminal of the seventh control switch, and a second terminal of the second equalization capacitor is separately connected to the second connection terminal of the sixth control switch and the first connection terminal of the eighth control switch, where a first equalization phase and a second equalization phase are alternately entered in an equalization process of the equalization circuit; in the first equalization phase, the first control switch, the second control switch, the fifth control switch, and the sixth control switch are turned on, and the third control switch, the fourth control switch, the seventh control switch, and the eighth control switch are turned off; and in the second equalization phase, the first control switch, the second control switch, the fifth control switch, and the sixth control switch are turned off, and the third control switch, the fourth control switch, the seventh control switch, and the eighth control switch are turned on.

In this way, because the equalization capacitor performs equalization in a manner of electrical energy storage and electrical energy transfer, electrical energy losses of the equalization circuit are reduced, and an equalization rate is increased.

For example, a control terminal of each of the first control switch, the second control switch, the fifth control switch, and the sixth control switch is configured to receive a first drive signal HO. A control terminal of each of the third control switch, the fourth control switch, the seventh control switch, and the eighth control switch is configured to receive a second drive signal LO. The first drive signal HO and the second drive signal LO are inverted signals.

In a case in which each control switch is an NMOS, in the first equalization phase, the first drive signal HO is at a high level, and the second drive signal is at a low level, so that each battery cell is connected in parallel to an equalization capacitor corresponding to the battery cell. In the second equalization phase, the first drive signal HO is at a low level, and the second drive signal is at a high level, so that a plurality of equalization capacitors are connected in parallel. Optionally, each control switch may alternatively be a PMOS. Correspondingly, in the first equalization phase, the first drive signal HO is at a low level, the second drive signal LO is at a high level, and in the second equalization phase, the first drive signal HO is at a high level, and the second drive signal LO is at a low level.

For example, in a case in which the power supply circuit further includes the third battery cell, the equalization circuit may further include a ninth control switch to a twelfth control switch and a third equalization capacitor.

For example, in a case in which the power supply circuit further includes a fourth battery cell, the equalization circuit further includes a thirteenth control switch to a sixteenth control switch and a fourth equalization capacitor.

According to the first aspect or any implementation of the first aspect, switching frequencies of the first control switch to the eighth control switch are positively correlated with a voltage difference between the first battery cell and the second battery cell.

In this way, when the voltage difference of the battery cell is relatively low, equalization can be performed at a relatively low switching frequency, thereby reducing equalization losses. In addition, when the voltage difference of the battery cell is relatively high, equalization is performed at a relatively high switching frequency, thereby improving an equalization effect.

According to a second aspect, an embodiment of this application provides an electronic device, and the electronic device includes a power supply circuit, a first load, and a second load in the first aspect or any possible implementation of the first aspect.

According to the second aspect, the electronic device may be a laptop.

The second aspect and any implementation of the second aspect respectively correspond to the first aspect and any implementation of the first aspect. For technical effects corresponding to the second aspect and the any implementation of the second aspect, refer to technical effects corresponding to the first aspect and the any implementation of the first aspect. Details are not described herein again.

### BRIEF DESCRIPTION OF DRAWINGS

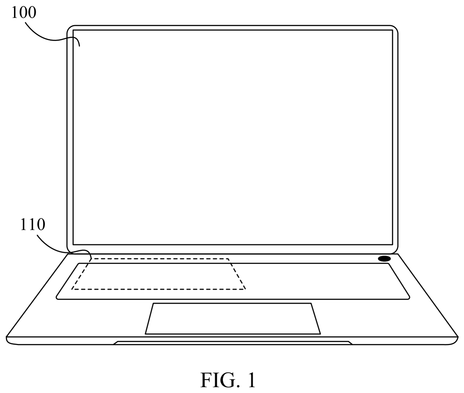

FIG. 1 is a schematic diagram of a structure of an electronic device according to an embodiment of this application;

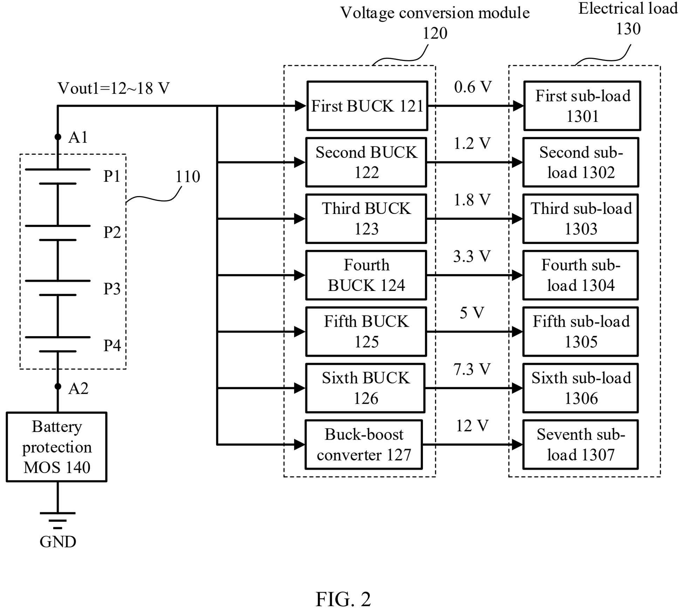

FIG. 2 is a schematic diagram of a structure of a battery power supply circuit in a related technical solution according to an embodiment of this application;

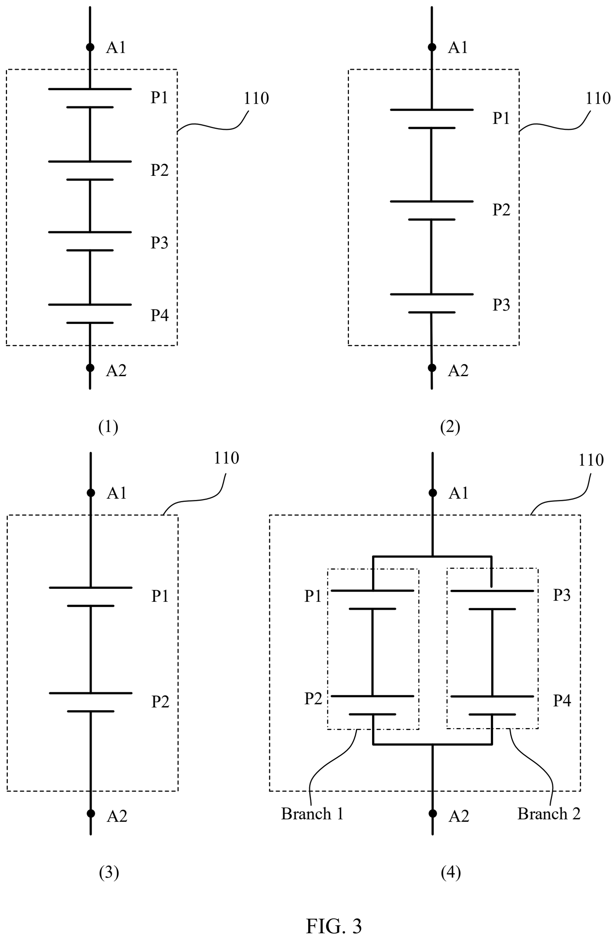

FIG. 3 is a schematic diagram of a structure of a battery module according to an embodiment of this application;

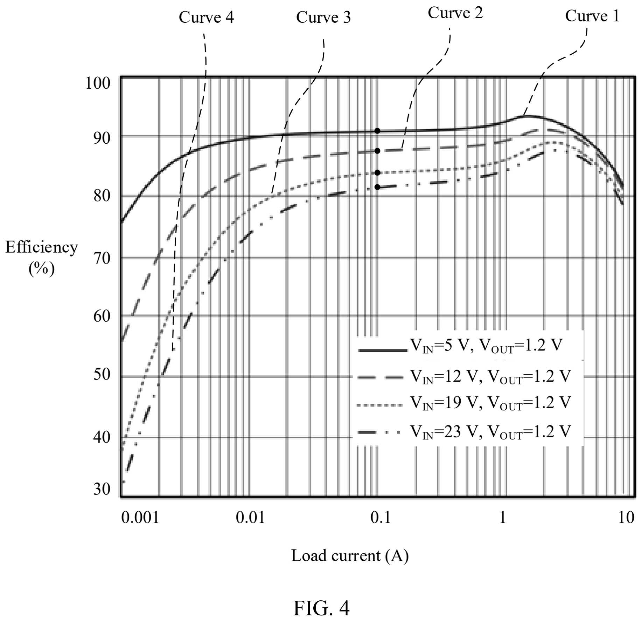

FIG. 4 is a schematic diagram of an example change relationship between efficiency and a load current according to an embodiment of this application;

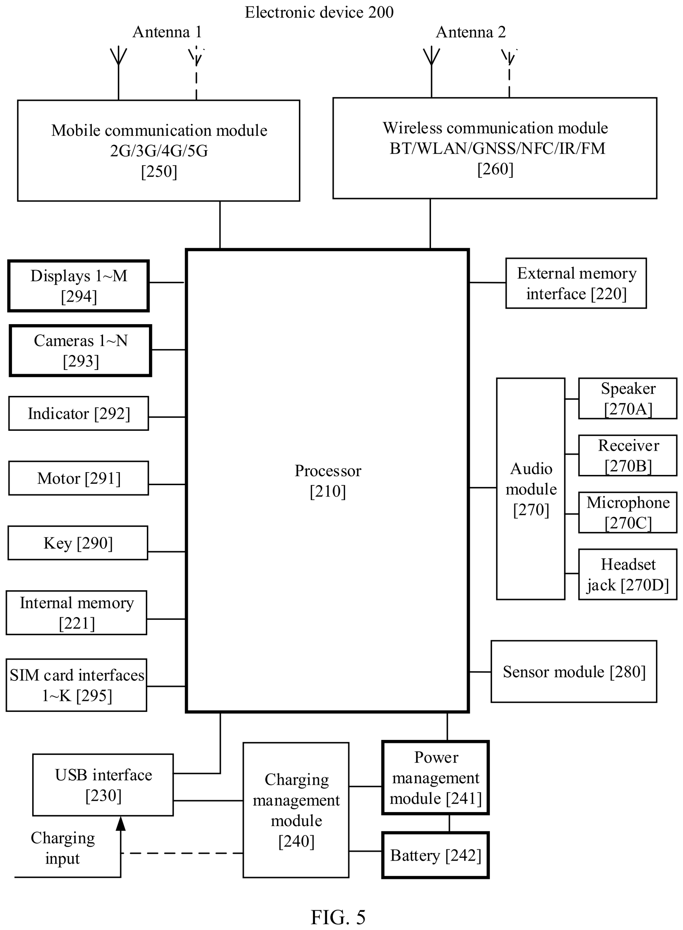

FIG. 5 is a schematic diagram of a structure of an electronic device;

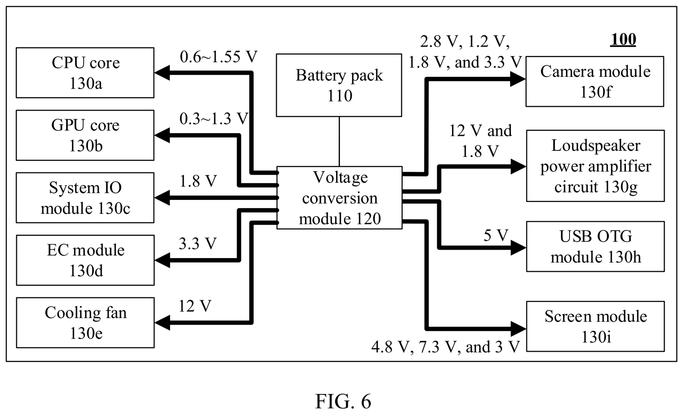

FIG. 6 is a schematic diagram of a structure of an example electronic device according to an embodiment of this application;
FIG. 7 is a schematic diagram of a structure of an electronic device according to an embodiment of this application;
FIG. 8 is a schematic diagram of a structure of another electronic device according to an embodiment of this application;
FIG. 9 is a schematic diagram of a structure of still another electronic device according to an embodiment of this application;
FIG. 10 is a schematic diagram of a structure of yet another electronic device according to an embodiment of this application;
FIG. 11 is a schematic diagram of a structure of yet another electronic device according to an embodiment of this application;

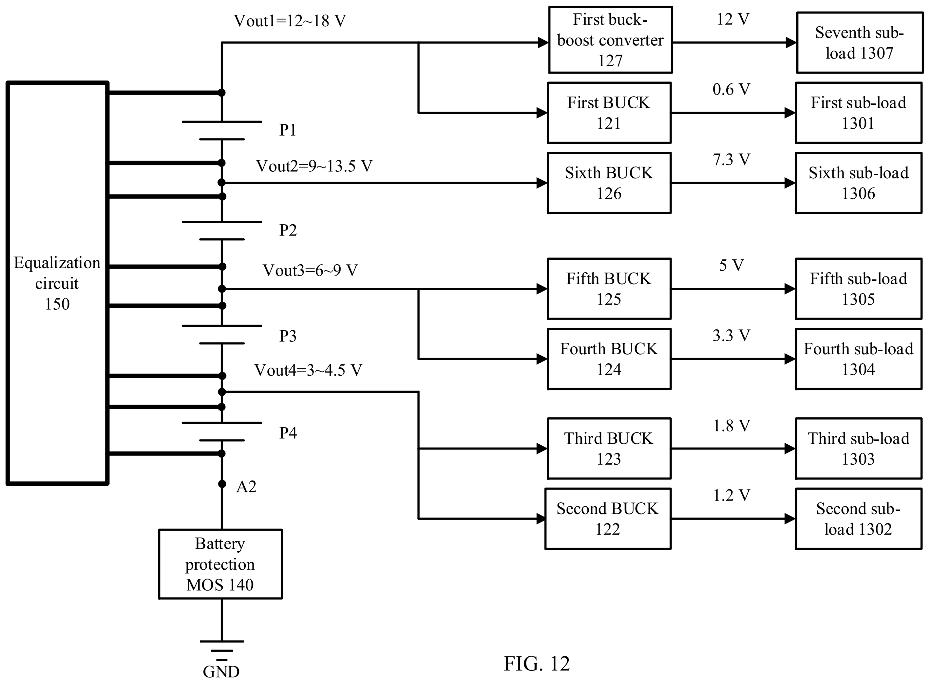

FIG. 12 is a schematic diagram of a structure of yet another electronic device according to an embodiment of this application;

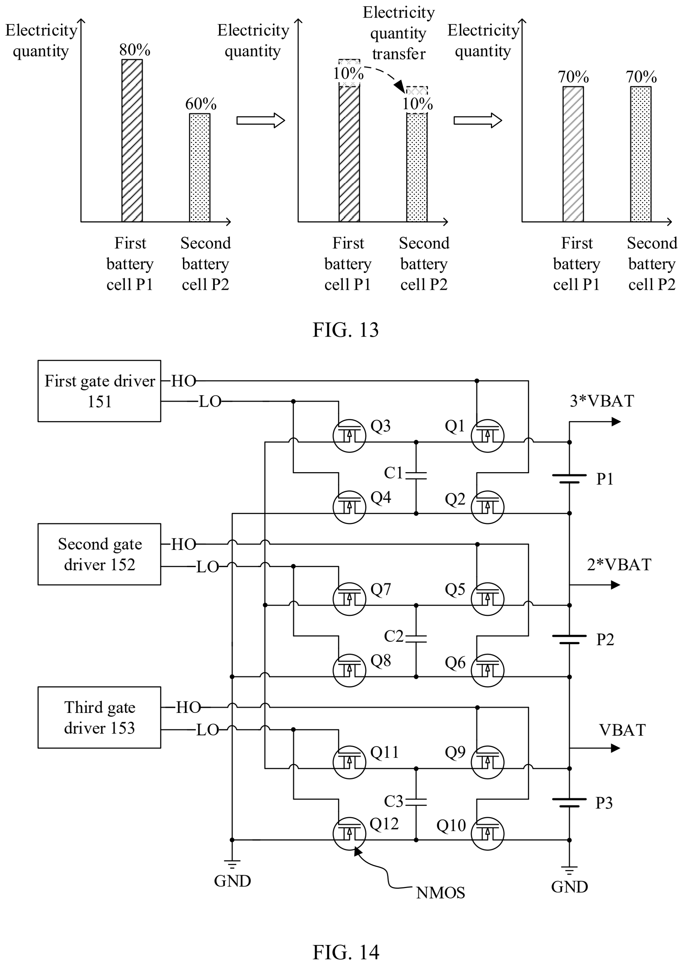

FIG. 13 is a schematic diagram of an active equalization process according to an embodiment of this application;
FIG. 14 is a schematic diagram of a structure of an example equalization circuit according to an embodiment of this application;

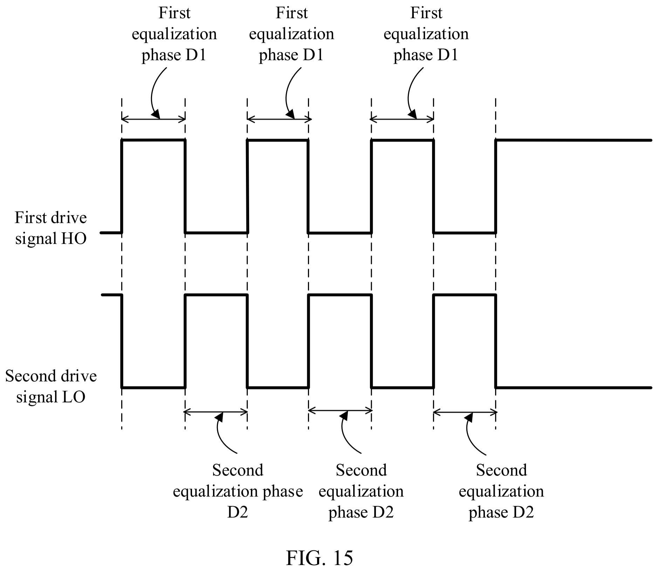

FIG. 15 is a schematic diagram of an example drive signal according to an embodiment of this application;

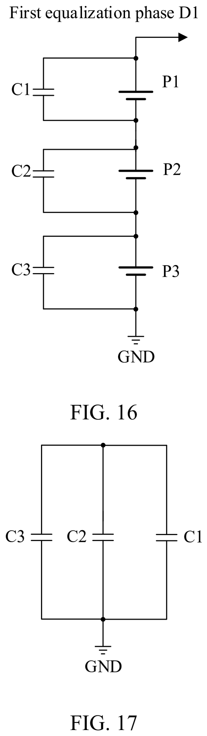

FIG. 16 is a diagram of an equivalent circuit of an example equalization circuit according to an embodiment of this application;
FIG. 17 is a diagram of an equivalent circuit of another example equalization circuit according to an embodiment of this application; and

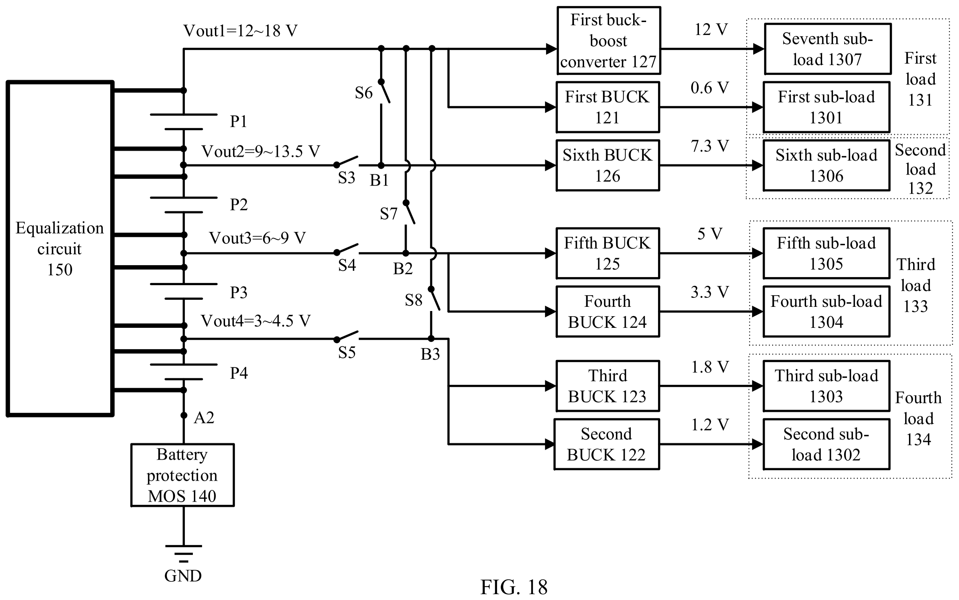

FIG. 18 is a schematic diagram of a structure of yet another electronic device according to an embodiment of this application.

### DESCRIPTION OF EMBODIMENTS

The technical solutions of the embodiments of this application are clearly and completely described below with reference to the accompanying drawings of the embodiments of this application. Clearly, the described embodiments are some rather than all of the embodiments of this application. All other embodiments obtained by persons of ordinary skill in the art based on the embodiments of this application without creative efforts shall fall within the protection scope of this application.

In this specification, the term "and/or" is merely used to describe an association relationship between associated objects, and indicates that three relationships may exist. For example, A and/or B may indicate the following three cases: Only A exists, both A and B exist, and only B exists.

The terms "first", "second", and the like in the specification and claims of the embodiments of this application are used to distinguish between different objects, and are not used to describe a particular order of the objects. For example, a first target object, a second target object, and the like are used to distinguish between different target objects, and are not used to describe a particular order of target objects.

In the embodiments of this application, words such as "example" or "for example" are used to indicate an example, illustration, or description. Any embodiment or design solution described as "example" or "for example" in the embodiments of this application should not be construed as being more preferred or advantageous than other embodiments or design solutions. Exactly, use of the words such as "example" or "for example" is intended to present related concepts in a specific manner.

In the description of the embodiments of this application, unless otherwise stated, "a plurality of" means two or more. For example, a plurality of processing units refer to two or more processing units, and a plurality of systems refer to two or more systems.

With increasing development, electronic devices such as a mobile phone and a tablet computer have become indispensable items in people's daily life. Because a battery serves as a power source of each component of the electronic device, the battery becomes an essential and important component of the electronic device.

FIG. 1 is a schematic diagram of a structure of an electronic device according to an embodiment of this application. As shown in FIG. 1, an electronic device 100 may be implemented as a personal computer (Personal Compute, PC), and the PC may be provided with a battery module 110.

With development of the electronic devices, power consumption of the electronic devices such as a personal computer (Personal Compute, PC) usually reaches as high as tens to hundreds of watts. For example, power consumption of a thin and light-type notebook computer may be tens of watts, and power consumption of a game-type notebook computer may reach hundreds of watts. Even more, after performance of a graphics processing unit (Graphics Processing Unit, GPU) is further improved, power consumption of the device may further increase, for example, reach several hundreds of watts. If a single battery cell is used for supplying power, a battery current may be relatively high, which makes design of the entire power supply system more difficult.

In this case, in a related technology, a battery design solution of a plurality of battery cells connected in series is often used to supply power to the electronic device, for example, "2-series 2-parallel", "3-series 1-parallel", or "4-series 1-parallel". FIG. 2 is a schematic diagram of a structure of a battery power supply circuit in a related technical solution according to an embodiment of this application. As shown in FIG. 2, the electronic device may include a battery module 110, a voltage conversion module 120, an electrical load 130, and a battery protection MOS 140. A positive electrode A1 of the battery module 110 is connected to an input terminal of the voltage conversion module 120, and a negative electrode A2 of the battery module 110 is grounded GND by using the battery protection MOS 140. In addition, an output terminal of the voltage conversion module 120 is connected to the electrical load 130.

For the battery module 110, the battery module 110 may include at least one parallel branch, and each branch has two or more single battery cells connected in series. For example, FIG. 3 is a schematic diagram of a structure of a battery module according to an embodiment of this application. In an embodiment, in a "4-series 1-parallel" battery design solution shown in (1) in FIG. 3, the battery module 110 may include four battery cells from a first battery cell P1 to a fourth battery cell P4 that are connected in series. Specifically, a positive electrode of the first battery cell P1 serves as the positive electrode A1 of the battery module 110, a negative electrode of the first battery cell P1 is connected to a positive electrode of the second battery cell P2, a negative electrode of the second battery cell P2 is connected to a positive electrode of the third battery cell P3, a negative electrode of the third battery cell P3 is connected to a positive electrode of the fourth battery cell P4, and a negative electrode of the fourth battery cell P4 serves as the negative electrode A2 of the battery module 110.

In another embodiment, in a "3-series 1-parallel" battery design solution shown in (2) in FIG. 3, the battery module 110 may include three battery cells from a first battery cell P1 to a third battery cell P3 that are connected in series.

In still another embodiment, in a battery design solution "2-series 1-parallel" shown in (3) in FIG. 3, the battery module 110 may include two battery cells of a first battery cell P1 and a second battery cell P2 that are connected in series.

In yet another embodiment, in a "2-series 2-parallel" battery design solution shown in (4) in FIG. 3, the battery module 110 may include two parallel branches, and each parallel branch may include two battery cells connected in series. For example, a branch 1 may include a first battery cell P1 and a second battery cell P2 connected in series, and a branch 2 may include a third battery cell P3 and a fourth battery cell P4 connected in series.

For the battery module 110, an output voltage of the battery module 110 may be boosted to a plurality of times an output voltage of a single battery cell. For example, in the "2-series 1-parallel" and "2-series 2-parallel" solutions, the output voltage may be boosted to twice an output voltage of a single battery cell, in the "3-series 1-parallel" solution, the output voltage may be boosted to three times an output voltage of a single battery cell, and in the "4-series 1-parallel" solution, the output voltage may be boosted to four times an output voltage of a single chip. For example, that an output voltage of a single battery cell is 3~4.5 volts (V) is used as an example. In this case, the output voltage (hereinafter referred to as a battery voltage) of the battery module 110 in the "4-series 1-parallel" solution may reach 12~18 V. It should be noted that, in this embodiment of this application, the output voltage of the battery module 110 varies. For example, when an electricity quantity of each battery cell in the battery module 110 shown in (1) in FIG. 3 is exhausted, the output voltage of the battery module 110 may be 12 V, and when each battery cell is in a fully charged state, the output voltage of the battery module 110 may be 18 V.

After the battery module 110 is described, the electrical load 130 and the voltage conversion module 120 are next described.

Because different loads in the electronic device require different operating voltages, correspondingly, the electrical load 130 may be classified into a first sub-load, a second sub-load, and ... based on the different operating voltages. For example, as shown in FIG. 2, the electrical load 130 may include a first sub-load 1301, a second sub-load 1302, a third sub-load 1303, a fourth sub-load 1304, a fifth sub-load 1305, a sixth sub-load 1306, and a seventh sub-load 1307. In this embodiment of this application, a part of the electrical load 130 may be located on a circuit board of the electronic device, for example, loads such as a CPU may be welded to the circuit board. Another part of the electrical load 130 may be located outside the circuit board of the electronic device, for example, a fan may be connected to the circuit board of the electronic device by using a line.

In addition, the electronic device further needs to convert the battery voltage into different operating voltages by using various voltage conversion modules 120. In this embodiment of this application, the voltage conversion module 120 may be implemented as a direct current-direct current (Direct Current-Direct Current, DCDC) converter, namely, a voltage converter that uses an inductor as an energy storage element, for example, a buck converter (BUCK), a boost converter (BOOST), or a buck-boost converter (BUCK-BOOST). For example, as shown in FIG. 2, the voltage conversion module 120 may include a first BUCK 121, a second BUCK 122, a third BUCK 123, a fourth BUCK 124, a fifth BUCK 125, a sixth BUCK 126, and a first buck-boost converter 127. In this embodiment of this application, each converter (for example, a BUCK or a BOOST) may be implemented as a separate chip, or a plurality of converters may be integrated into one power management chip (Power Management Unit, PMU). It should be noted that, in this embodiment of this application, the voltage conversion module 120 may alternatively be implemented as another converter, for example, a switch capacitor (Switch Capacitor Converter, SC) circuit. This is not specifically limited.

Still referring to FIG. 2, after the battery module 110 outputs an output voltage Vout1, the first BUCK 121 may buck the output voltage Vout1 to an operating voltage of 0.6 V, and output the operating voltage of 0.6 V to the first sub-load 1301, to meet an electrical requirement of the first sub-load 1301; the second BUCK 122 may buck the output voltage Vout1 to an operating voltage of 1.2 V, to provide the operating voltage of 1.2 V to the second sub-load 1302; ...; the sixth BUCK 126 may buck the output voltage Vout1 to an operating voltage of 7.3 V, to provide the operating voltage of 7.3 V to the sixth sub-load 1306; and the first buck-boost converter 127 may adjust the output voltage Vout1 to an operating voltage of 12 V, to provide the operating voltage of 12 V to the seventh sub-load 1307.

The inventors found that working efficiency of a direct current voltage converter such as a buck converter is inversely proportional to a difference of voltages at two terminals (a difference of voltages at an input terminal and an output terminal) of the direct current voltage converter. To be specific, a larger difference of voltages at the two terminals of the direct current voltage converter indicates lower working efficiency (electrical energy conversion efficiency) of the direct current voltage converter, and a smaller difference of voltages at the two terminals of the direct current voltage converter indicates higher working efficiency. For example, FIG. 4 is a schematic diagram of an example change relationship between efficiency and a load current according to an embodiment of this application. As shown in FIG. 4, in a case in which all output voltages Vout are 1.2 V, curves 1-4 are curves of variations of working efficiency of a buck converter with load currents when input voltages Vin are respectively 5 V, 12 V, 19 V, and 23 V.

It may be learned from comparing the curve 1-the curve 4 that when the input voltage Vin is 5 V, the overall working efficiency of the buck converter is higher than that at another input voltage. For example, when a load current is 1 A, if the input voltage Vin is 19 V, the working efficiency of the buck converter is about 85%. When the input voltage Vin is 5 V, the working efficiency of the buck converter is about 92%. An efficiency difference between the two is 7%. It may be learned from this that a larger difference of voltages at two terminals of the buck converter indicates a larger heat loss of the buck converter and lower working efficiency (electricity quantity conversion efficiency).

In addition, the inventors further found that in the battery design solution shown in FIG. 2, a higher output voltage Vout1 of the battery module indicates a larger difference of voltages at two terminals of a part of direct current voltage converters. For example, an input voltage of the first BUCK 121 may be as high as 18 V, and an output voltage of the first BUCK 121 may be as low as 0.6 V. Correspondingly, working efficiency of a part of direct current voltage converters is relatively low due to a relatively large difference of voltages at the two terminals. The relatively large voltage difference causes more heat losses to a voltage conversion process, affects working efficiency of the buck converter, further affects a waste of an electricity quantity of a battery, and affects a battery life of the electronic device.

Based on this, embodiments of this application provide a power supply circuit and an electronic device. In a case in which a battery module of the electronic device includes a plurality of battery cells connected in series, a voltage converter is connected to positive electrodes of different battery cells, so that a difference of voltages at two terminals of a part of voltage converters can be reduced, working efficiency of the voltage converter is improved, and electricity quantity utilization of the battery module is improved, thereby extending a battery life of the electronic device.

Before the technical solutions in the embodiments of this application start to be described, the technical terms in the embodiments of this application are first described.
(1) Direct current (Direct Current- Direct Current, DCDC) voltage converter: is a device configured to convert an input voltage into an output voltage. For example, the direct current voltage converter may be a converter using an inductor as an energy storage element. For example, the direct current voltage converter may include a BUCK converter, a BOOST converter, a BUCK-BOOST converter, and the like. It should be noted that the direct current voltage converter may further include a switch capacitor (Switch Capacitor Converter, SC) circuit and the like. This is not specifically limited.
(2) Buck converter: is a device that bucks an input voltage to an output voltage of a fixed voltage value. For example, the buck converter may be a BUCK converter. In an example, one or more BUCK converters may be integrated into one power supply chip, and a specific form thereof is not limited.
(3) Boost converter: is a device that can boost an input voltage to an output voltage of a fixed voltage value. For example, the boost converter may be a BOOST converter. In an example, one or more BOOST converters may also be integrated into one power supply chip, and a specific form thereof is not limited.
(4) Buck-boost converter: is a converter that has both a boost function and a buck function. For example, the buck-boost converter may be a BOOST-BUCK converter.

After the foregoing terms are described, the electronic device in the embodiments of this application is further described. It should be noted that the electronic device provided in an embodiment of this application includes but is not limited to an electronic device having a plurality of battery cells, such as a mobile phone, a tablet computer, a laptop, an ultra-mobile personal computer (Ultra-Mobile Personal Computer, UMPC), a personal digital assistant (Personal Digital Assistant, PDA), a point of sales (Point Of Sales, POS), a walkie-talkie, an in-vehicle computer, a television, an intelligent wearable device (for example, a smartwatch or a smart band), a smart household device (for example, a Bluetooth speaker), a dashcam, a security device, or the like. A specific type of the electronic device is not particularly limited in this embodiment of this application. For ease of description, an example in which the electronic device is a PC is used below for description in this embodiment of this application.

FIG. 5 is a schematic diagram of a structure of an electronic device 200. It should be understood that the electronic device 200 shown in FIG. 5 is merely an example of the electronic device, and the electronic device 200 may have more or fewer components than those shown in the figure, may combine two or more components, or may have different component configurations. The components shown in FIG. 5 may be implemented in hardware that includes one or more signal processing and/or application-specific integrated circuits, software, or a combination of hardware and software.

The electronic device 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a key 290, a motor 291, an indicator 292, a camera 293, a display 294, and a subscriber identification module (subscriber identification module, SIM) card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 200. The controller may generate an operation control signal based on instruction operation code and a timing signal, to complete control of instruction fetching and instruction execution.

A memory may be further disposed in the processor 210 to store instructions and data. In some embodiments, the memory in the processor 210 is a cache memory. The USB interface 230 is an interface that complies with USB standard specifications, and may be specifically a Mini USB interface, a Micro USB interface, a USB Type C interface, or the like. The USB interface 230 may be configured to be connected to a charger to charge the electronic device 200, or may be configured to transmit data between the electronic device 200 and a peripheral device, or may be configured to be connected to a headset to play audio through the headset. The interface may alternatively be configured to be connected to another electronic device, for example, an AR device.

The charging management module 240 is configured to receive a charging input from a charger. The charger may be a wireless charger or a wired charger. In some embodiments of wired charging, the charging management module 240 may receive a charging input of a wired charger through the USB interface 230. In some embodiments of wireless charging, the charging management module 240 may receive a wireless charging input through a wireless charging coil of the electronic device 200. When charging the battery 242, the charging management module 240 may further supply power to the electronic device by using the power management module 241.

The power management module 241 is configured to be connected to the battery 242, the charging management module 240, and the processor 210. The power management module 241 receives an input from the battery 242 and/or the charging management module 240, to supply power to the processor 210, the internal memory 221, an external memory, the display 294, the camera 293, the wireless communication module 260, and the like. In this embodiment of this application, the power management module 241 may be implemented as a voltage conversion module 120. In addition, in this embodiment of this application, the battery 242 may be implemented as a battery module 110. For example, still referring to FIG. 3, the battery module may include at least one power supply branch, and each power supply branch may include a plurality of battery cells connected in series.

A wireless communication function of the electronic device 200 may be implemented by using the antenna 1, the antenna 2, the mobile communication module 250, the wireless communication module 260, the modem processor, the baseband processor, and the like.

The antenna 1 and the antenna 2 are configured to transmit and receive electromagnetic wave signals. Each antenna in the electronic device 200 may be configured to cover one or more communication bands. Different antennas may be further multiplexed to improve antenna utilization. For example, the antenna 1 may be multiplexed as a diversity antenna of a wireless local area network. In some other embodiments, the antenna may be used together with a tuning switch.

The mobile communication module 250 may provide a solution for wireless communication that is applied to the electronic device 200 and that includes 2G/3G/4G/5G and the like. The mobile communication module 250 may include at least one filter, switch, power amplifier, low noise amplifier (low noise amplifier, LNA), and the like. The wireless communication module 260 may provide a solution for wireless communication that is applied to the electronic device 200 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like.

In some embodiments, the antenna 1 of the electronic device 200 is coupled to the mobile communication module 250, and the antenna 2 is coupled to the wireless communication module 260, so that the electronic device 200 can communicate with a network and another device by using a wireless communication technology.

The electronic device 200 implements a display function by using the GPU, the display 294, the application processor, and the like. The GPU is a microprocessor for image processing and connects the display 294 and the application processor. The GPU is configured to perform mathematical and geometric computing for graphics rendering. The processor 210 may include one or more GPUs that execute program instructions to generate or change displayed information.

The display 294 is configured to display an image, a video, and the like. The display 294 includes a display panel. The display panel may be a liquid crystal display (liquid crystal display, LCD), an organic light-emitting diode (organic light-emitting diode, OLED), or the like. In some embodiments, the electronic device 200 may include one or M displays 294, where M is a positive integer greater than 1.

The electronic device 200 can implement a shooting function by using the ISP, the camera 293, the video codec, the GPU, the display 294, the application processor, and the like.

The camera 293 is configured to capture a still image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 200 may include one or N cameras 293, where N is a positive integer greater than 1.

The external memory interface 220 may be configured to be connected to an external memory card, for example, a Micro SD card, to extend a storage capability of the electronic device 200. The external memory card communicates with the processor 210 through the external memory interface 220 to implement a data storage function, for example, to store files such as music and videos in the external memory card.

The internal memory 221 may be configured to store computer-executable program code. The executable program code includes instructions. The processor 210 implements various function applications and data processing of the electronic device 200 by running the instructions stored in the internal memory 221. The internal memory 221 may include a program storage area and a data storage area. The program storage area may store an operating system, an application required by at least one function (for example, a sound playback function or an image playback function), and the like. The data storage area may store data (for example, audio data and a phone book) created during use of the electronic device 200. In addition, the internal memory 221 may include a high-speed random access memory, and may further include a nonvolatile memory, for example, at least one magnetic disk storage device, a flash memory device, or a universal flash storage (universal flash storage, UFS).

The electronic device 200 may implement an audio function by using the audio module 270, the speaker 270A, the receiver 270B, the microphone 270C, the headset jack 270D, the application processor, and the like. For example, music playback or audio recording is implemented.

The audio module 270 is configured to convert digital audio information into an analog audio signal for output, and is also configured to convert an analog audio input into a digital audio signal. The audio module 270 may be further configured to encode and decode an audio signal. In some embodiments, the audio module 270 may be disposed in the processor 210, or some functional modules of the audio module 270 may be disposed in the processor 210.

The key 290 includes a power-on key, a volume key, and the like. The key 290 may be a mechanical key, or may be a touch key. The electronic device 200 may receive key input and generate a key signal input related to user settings and function control of the electronic device 200.

The motor 291 may generate a vibration prompt. The motor 291 may be configured to provide a vibration prompt for an incoming call, and may alternatively be configured to provide vibration feedback for touch. For example, touch operations performed on different applications (for example, shooting and audio playback) may correspond to different vibration feedback effects. The indicator 292 may be an indicator light, and may be configured to indicate a charging state, a power change, a message, a missed incoming call, a notification, and the like.

FIG. 6 is a schematic diagram of a structure of an example electronic device according to an embodiment of this application. As shown in FIG. 6, an electronic device 100 may include a battery module 110, a voltage conversion module 120, a CPU core (core) 130a, a GPU core (core) 130b, a system input/output (Input/Output, IO) module 130c, an embedded controller (Embedded Controller, EC) module 130d, a cooling fan 130e, a camera module 130f, a loudspeaker power amplifier circuit 130g, and a USB OTG (short for USB On-The-Go, namely, an interface configured to connect the electronic device and another device) module 130h and a screen module 130i.

In this embodiment of this application, the voltage conversion module 120 may provide a dynamic power supply voltage to the CPU core 130a, and a voltage range of the dynamic power supply voltage may be 0.6 V~1.55 V. For example, when the electronic device 100 performs a light load such as a large-scale task, the voltage conversion module 120 may provide a power supply voltage of 0.6 V to the CPU core 130a. When a load is high, the voltage conversion module 120 provides a power supply voltage of 1.55 V to the CPU core 130a, so that power consumption of the electronic device can be reduced while performance of the electronic device is improved.

In addition, the voltage conversion module 120 may provide a dynamic power supply voltage to the GPU core 130b, and a voltage range of the dynamic power supply voltage may be 0.3 V~1.3 V. The voltage conversion module 120 may further provide a voltage of 1.8 V for the system IO module 130c, so that the system IO module 130c generates a logic level. The voltage conversion module 120 may further provide a power supply voltage of 3.3 V to the EC module 130d. The voltage conversion module 120 may further provide a power supply voltage of 12 V to the cooling fan 130e. The voltage conversion module 120 may further provide power supply voltages of 1.2 V, 1.8 V, 2.8 V, and 3.3 V to the camera module 130f. The voltage conversion module 120 may further provide power supply voltages of 12 V and 1.2 V to the loudspeaker power amplifier circuit 130g. The voltage conversion module 120 may further provide a power supply voltage of 5 V to the USB OTG module 130h. The voltage conversion module 120 may further provide a power supply voltage of 7.3 V to the screen module 130i.

In addition, the foregoing electrical devices, for example, the CPU core, may be disposed on a circuit board of the electronic device 100. The cooling fan and the like may be disposed separately from the circuit board, and positions for disposing the cooling fan and the like are not specifically limited. It should be noted that for other content of the battery module 110 and the voltage conversion module 120, refer to related descriptions in the foregoing parts of this application. Details are not described again.

After the foregoing hardware structures are described, the specific solutions in embodiments of this application are further described.

FIG. 7 is a schematic diagram of a structure of an electronic device according to an embodiment of this application. As shown in FIG. 7, the electronic device may include a battery module 110, a voltage conversion module 120, an electrical load 130, and a battery protection MOS 140. It should be noted that, in the laptop field, a high-performance laptop such as a gaming laptop has features such as high performance and high power, and often requires an increasingly higher power supply voltage. In this case, the high-performance laptop such as the gaming laptop may use a power supply design solution of "4-series 1-parallel" shown in FIG. 7 as a power supply circuit of the high-performance laptop such as the gaming laptop.

A difference from the electronic device shown in FIG. 2 lies in that, in the electronic device shown in FIG. 7, a positive electrode of a first battery cell P1 outputs a first battery voltage Vout1, a positive electrode of a second battery cell P2 outputs a second battery voltage Vout2, a positive electrode of a third battery cell P3 outputs a third battery voltage Vout3, and a positive electrode of a fourth battery cell P4 outputs a fourth battery voltage Vout4. In an example, if a change range of a battery cell voltage VBAT is 3~4.5 V, the first battery voltage Vout1 is equal to 4 times the battery cell voltage VBAT, that is, a change range of the first battery voltage Vout1 is 12~18 V; the second battery voltage Vout2 is equal to 3 times the battery cell voltage VBAT, that is, a change range of the second battery voltage Vout2 is 9~13.5 V; the third battery voltage Vout3 is equal to twice the battery cell voltage VBAT, that is, a change range of the third battery voltage Vout3 is 6~9 V; and the fourth battery voltage Vout4 is equal to the battery cell voltage VBAT, that is, a change range of the fourth battery voltage Vout4 is 3~4.5 V.

In some embodiments, the first battery cell P1-the fourth battery cell P4 may use same battery cells, for example, use battery cells with a same specification. In another embodiment, because power consumption of the battery cells is different, to ensure battery safety, battery capacities of the first battery cell P1-the fourth battery cell P4 may be different. For example, because power consumption of the first battery cell P1-the fourth battery cell P4 sequentially increases, the battery capacities of the first battery cell P1-the fourth battery cell P4 may sequentially increase. For example, any one of the second battery cell P2-the fourth battery cell P4 may include a plurality of single battery cells connected in parallel, to increase the battery capacity of the battery cell. Alternatively, the battery capacity of the battery cell may be increased by selecting a large-capacity battery cell. This is not specifically limited.

The voltage conversion module 120 may include a plurality of voltage converters, and output voltages of the voltage converters are different. In this embodiment of this application, the voltage converter may be implemented as a BUCK, a BOOST, or a buck-boost converter (BUCK-BOOST). For example, the voltage converters may include a first BUCK 121-a sixth BUCK 126, and further include a first buck-boost converter 127. In one example, to reduce power supply costs, each voltage converter is preferentially BUCK. Correspondingly, an output voltage of each voltage converter should be less than a minimum battery value of a connected battery cell. For example, an output voltage of a BUCK connected to the second battery cell P2 should be less than 9 V. In addition, when the BUCK cannot work, a BOOST (in this case, an output voltage of each voltage converter should be greater than a maximum voltage value of a connected battery cell, for example, an output voltage of a BOOST connected to the second battery cell P2 should be greater than 13.5 V) or a buck-boost converter (an output voltage of the buck-boost converter is less than or equal to a maximum voltage of a connected battery cell and greater than or equal to a minimum voltage of the connected battery cell) may be selected. For example, still referring to FIG. 7, an operating voltage of a seventh sub-load 1307 is 12 V. To ensure normal working of the voltage converter, the first buck-boost converter 127 needs to be selected. It should be noted that, in this embodiment of this application, a BUCK or a buck-boost converter may be preferentially selected based on another requirement. This is not specifically limited.

In an embodiment, the fourth battery cell P4 may be connected to one or more BUCKs, and an output voltage of the BUCK connected to the fourth battery cell P4 is less than 3 V. For example, still referring to FIG. 7, both an input terminal of a third BUCK 123 and an input terminal of a second BUCK 122 are connected to the positive electrode of the fourth battery cell P4.

The third battery cell P3 may also be connected to one or more BUCKs, and an output voltage of the BUCK connected to the third battery cell P3 is greater than or equal to 3 V and less than 6 V. For example, still referring to FIG. 7, both input terminals of a fifth BUCK 125 and a fourth BUCK 124 are connected to the positive electrode of the third battery cell P3, to obtain the third battery voltage Vout3.

The second battery cell P2 may also be connected to one or more BUCKs, and an output voltage of the BUCK connected to the second battery cell P2 is greater than or equal to 6 V and less than 9 V.

The first battery cell P1 may be connected to one or more BUCKs, and an output voltage of the BUCK connected to the first battery cell P1 is greater than or equal to 9 V and less than 9 V. Alternatively, when an output terminal of the BUCK connected to the first battery cell P1 needs to be connected to a load with a large current peak value and a high dynamic response requirement, the output voltage of the BUCK is less than 12 V. For example, still referring to FIG. 7, an input terminal of the first BUCK 121 is connected to the positive electrode of the first battery cell P1, to obtain the first battery voltage Vout1. Alternatively, the first battery cell P1 may be connected to one or more BOOSTs, and an output voltage of the BOOST connected to the first battery cell P1 is greater than 18 V. Alternatively, the first battery cell P1 may alternatively be connected to one or more buck-boost converters, and an output voltage of the buck-boost converter may be any voltage value. In an embodiment, the output voltage of the buck-boost converter connected to the first battery cell P1 may be greater than or equal to 12 V and less than or equal to 18 V. For example, still referring to FIG. 7, an input terminal of the first buck-boost converter 127 is connected to the positive electrode of the first battery cell P1, to obtain the first battery voltage Vout1.

According to the foregoing embodiment, in a manner in which the second battery cell P2-the fourth battery cell P4 are connected to BUCK devices, and the first battery cell P1 is connected to a BUCK, a BOOST, or a buck-boost converter, complexity of the power supply circuit and circuit costs can be reduced while being able to normally supply power to various electrical loads in the electronic device and extending a battery life of the battery module.

It should be noted that, based on an actual scenario and a specific requirement, the fourth battery cell P4 may be further connected to a BOOST, and an output voltage of the BOOST connected to the fourth battery cell P4 should be greater than 4.5 V. In an example, the output voltage of the BOOST connected to the fourth battery cell P4 is greater than 4.5 V and less than 9 V. Alternatively, the fourth battery cell P4 may alternatively be connected to a buck-boost converter, and an output voltage of the buck-boost converter may be any voltage value. In an embodiment, the output voltage of the buck-boost converter connected to the fourth battery cell P4 may be greater than or equal to 3 V and less than or equal to 4.5 V.

In addition, it should be further noted that, when an output terminal of the BUCK connected to the third battery cell P3 needs to be connected to a load with a large current peak value and a high dynamic response requirement, the output voltage of the BUCK is less than 6 V. Alternatively, the third battery cell P3 may alternatively be connected to a BOOST, and an output voltage of the BOOST connected to the third battery cell P3 should be greater than 9 V. In an example, the output voltage of the BOOST connected to the third battery cell P3 is greater than 9 V and less than 13.5 V. Alternatively, the third battery cell P3 may alternatively be connected to a buck-boost converter, and an output voltage of the buck-boost converter may be any voltage value. In an embodiment, the output voltage of the buck-boost converter connected to the third battery cell P3 may be greater than or equal to 4.5 V and less than or equal to 9 V.

In addition, it should be further noted that, when an output terminal of the BUCK connected to the second battery cell P2 needs to be connected to a load with a large current peak value and a high dynamic response requirement, the output voltage of the BUCK is less than 9 V. For example, an input terminal of the sixth BUCK 126 is connected to the positive electrode of the second battery cell P2, to obtain the second battery voltage Vout2. The second battery cell P2 may alternatively be connected to a BOOST, and an output voltage of the BOOST connected to the second battery cell P2 should be greater than 13.5 V. In an example, the output voltage of the BOOST connected to the second battery cell P2 is greater than 13.5 V and less than 18 V. Alternatively, the second battery cell P2 may alternatively be connected to a buck-boost converter, and an output voltage of the buck-boost converter may be any voltage value. In an embodiment, the output voltage of the buck-boost converter connected to the second battery cell P2 may be greater than or equal to 9 V and less than or equal to 13.5 V.

It should be noted that when the electronic device further includes a load at an another operating voltage, for example, the electronic device further includes loads at an operating voltage of 4.8 V and 3 V, the electronic device further includes voltage converters configured to output 4.8 V and 3 V. A quantity of voltage converters and a value of an output voltage are not specifically limited in this embodiment of this application.

After the voltage conversion module 120 is described, the electrical load 130 is further described.

In addition, the electrical load 130 may include a first load 131, a second load 132, a third load 133, and a fourth load 134, which are further described one by one.

For the first load 131, an operating voltage of the first load 131 is generated by using the first battery voltage Vout1. In this embodiment of this application, the first load 131 may meet the following Condition 1 or Condition 2.

Condition 1: Load with a large current peak value or a high dynamic response requirement. For example, the first load may be one or more of a CPU core, a GPU core, or an NPU core. In an example, still referring to FIG. 7, a first sub-load 1301 may be a device with a large current peak value and a high dynamic response requirement, such as a CPU core. It should be noted that, for the device with a large current peak value and a high dynamic response requirement, a current peak value of the device may be as high as tens of amperes. For example, for a CPU core, and a current peak value of the CPU core may be as high as tens or hundreds of amperes, and in this case, instantaneous input power of a power supply chip (namely, a voltage converter) of the CPU core is extremely high. If a relatively low battery voltage is used, for example, the fourth battery voltage Vout is directly used to supply power, a current extracted from the battery module is extremely large. In this case, it is necessary to make impedance of a cabling route very small in a manner such as widening the cabling route, which increases difficulty of layout (layout) design. Therefore, in this embodiment of this application, the first battery voltage Vout1 is used to supply power to this type of load. Because the first battery voltage Vout1 is relatively high, an input current can be reduced, design difficulty is reduced, and safety of using electricity is improved. It should be noted that, in this embodiment of this application, the second battery voltage Vout2 or the third battery voltage Vout3 may be used to supply power based on a magnitude of a peak current of a load and a dynamic response speed. This is not specifically limited.

In addition, in a case in which the first sub-load 1301 is one or more of a CPU core, a GPU core, or an NPU core, an output voltage of the first BUCK 121 may dynamically change based on a task load of the foregoing core. For example, a CPU core is used as an example. If a task load of the CPU core is light, the first BUCK 121 may output a voltage of 0.6 V under control of a controller such as a CPU. In addition, when a task load of the CPU core is heavy (for example, processing a large-scale task or processing a plurality of tasks in parallel), the first BUCK 121 may output a voltage of 1.55 V under the control of the controller such as a CPU, so that power consumption is reduced while meeting an electrical requirement of a load with a high load power and a high dynamic response requirement such as a CPU core.

It should be noted that, for the load with a large current peak value or a high dynamic response requirement, the load may alternatively be connected to the positive electrode of the second battery cell P2, the third battery cell P3, or the positive electrode of the fourth battery cell P4 by using a voltage converter based on an actual situation. For example, an instantaneous peak power of the load may be estimated by using a peak current estimation module, and then voltage values at one time a battery cell voltage (VBAT)-four times the battery cell voltage (4*VBAT) may be calculated. Then a cabling width is determined based on a current value. Then, a proper cabling width and an impedance control target are selected based on a PCB wiring condition and a cost requirement, to comprehensively determine a positive electrode of which battery cell the above-mentioned load is connected to when a wiring width requirement and an impedance requirement are met. This is not specifically limited in this application.

Condition 2: An operating voltage of the first load 131 falls within a first value range. For specific content of the first value range, refer to the related description in the foregoing part of this embodiment of this application. For example, that a voltage converter connected to the first load 131 is a BUCK is used as an example, the operating voltage of the first load 131 may be less than 12 V (a minimum voltage value of the first battery voltage Vout1), and in this case, the first value range is (0, 12 V). For example, the operating voltage of the first load 131 is less than 12 V and greater than or equal to 9 V (a minimum voltage value of the second battery voltage Vout2), and in this case, the first value range is [9 V, 12 V). That a voltage converter connected to the first load 131 is a BOOST is used as an example, and the operating voltage of the first load 131 may be greater than 18 V (a maximum voltage value of Vout1). That a voltage converter connected to the first battery cell P1 is a buck-boost converter is used as an example, and the operating voltage of the first load 131 may not be limited. Optionally, the operating voltage of the first load 131 may be greater than or equal to 12 V and less than or equal to 18 V, and in this case, the first value range may be [9 V, 18 V]. In an example, still referring to FIG. 7, an operating voltage of the seventh sub-load 1307 is 12 V. The seventh sub-load may be a cooling fan 130e.

For the second load 132, an operating voltage of the second load 132 may be generated by using the second battery voltage Vout2. In this embodiment of this application, the second load 132 may meet the following Condition 3.

Condition 3: The operating voltage of the second load 132 falls within a second value range. In an embodiment, that the second load 132 is connected to a BUCK converter is used as an example, and the second value range may be (0, 9 V). In an embodiment, the second value range may be [6 V, 9 V). In an example, still referring to FIG. 7, the second load 132 may include a sixth sub-load 1306 (an operating voltage is 7.3 V), and the sixth sub-load 1306 may be the screen module 130i in FIG. 6.

It should be noted that when a voltage converter connected to the second load 132 is a BOOST converter or a buck-boost converter, a value range of the second load may be another value. For specific content of the value range of the second load, refer to related content of the output voltage of the voltage converter connected to the second battery cell P2 in the foregoing part of this embodiment of this application. Details are not described herein again.

For the third load 133, an operating voltage of the third load 133 may be generated by using the third battery voltage Vout3. In this embodiment of this application, the third load 133 may meet the following Condition 4.

Condition 4: The operating voltage of the third load 133 falls within a third value range. In an embodiment, that the third load 133 is connected to a BUCK converter is used as an example, and the third value range may be (0, 6 V). In an embodiment, the third value range may be [3 V, 6 V). In an example, still referring to FIG. 7, the third load 133 may include a fourth sub-load 1304 (an operating voltage is 3.3 V) and a fifth sub-load 1305 (an operating voltage is 5 V). The fourth sub-load 1304 may be the EC module 130d in FIG. 6. The fifth sub-load 1305 may be the USB OTG module 130h in FIG. 6.

It should be noted that when a voltage converter connected to the third load 133 is a BOOST converter or a buck-boost converter, a value range of the third load may be another value. For specific content of the value range of the third load, refer to related content of the output voltage of the voltage converter connected to the third battery cell P3 in the foregoing part of this embodiment of this application. Details are not described herein again.

For the fourth load 134, an operating voltage of the fourth load 134 may be generated by using the fourth battery voltage Vout4. In this embodiment of this application, the fourth load 134 may meet the following Condition 5.

Condition 4: The operating voltage of the fourth load 134 falls within a fourth value range. In an embodiment, that the fourth load 134 is connected to a BUCK converter is used as an example, and the fourth value range may be (0, 3 V). In an example, still referring to FIG. 7, the fourth load 134 may include a second sub-load 1302 (an operating voltage is 1.2 V) and a third sub-load 1303 (an operating voltage is 1.8 V). The second sub-load 1302 may be the camera module 130f and the loudspeaker power amplifier circuit 130g in FIG. 6. The third sub-load 1303 may be the system IO module 130c, the camera module 130f, and the loudspeaker power amplifier circuit 130g in FIG. 6. It should be noted that, if a load requires a plurality of operating voltages, for example, the camera module 130f and the loudspeaker power amplifier circuit 130g, it may be considered that the load serves as a plurality of loads such as the third load and the fourth load.

It should be noted that when a voltage converter connected to the fourth load 134 is a BOOST converter or a buck-boost converter, a value range of the fourth load may be another value. For specific content of the value range of the fourth load, refer to related content of the output voltage of the voltage converter connected to the fourth battery cell P4 in the foregoing part of this embodiment of this application. Details are not described herein again.

In a specific power supply circuit process, for each electrical load, based on working efficiency of a voltage converter to which the electrical load is connected, a positive electrode of which battery cell the voltage converter is connected to may be selected, for example, each voltage converter is connected based on an efficiency curve.

In a specific example, the load with a large current peak value or a high dynamic response requirement may be connected to the positive electrode of the first battery cell P1 by using a BUCK. For another electrical load, if an operating voltage of the another electrical load is within a value range of (0, 3 V), the another electrical load is the fourth load 134, and may be connected to the positive electrode of the fourth battery cell P4 by using a BUCK device. If an operating voltage the another electrical load is within a value range of [3 V, 6 V), the another electrical load is the third load 133, and may be connected to the positive electrode of the third battery cell P3 by using a BUCK device. If an operating voltage of the another electrical load is within a value range of [6 V, 9 V), the another electrical load is the second load 132, and may be connected to the positive electrode of the second battery cell P2 by using a BUCK device. If an operating voltage of the another electrical load is within a value range of [9 V, 12 V), the another electrical load is the first load 131, and may be connected to the positive electrode of the first battery cell P1 by using a BUCK device; and within the value range of [9 V, 12 V). If an operating voltage of the another electrical load is within a value range of (18 V, +∞), the another electrical load is the first load 131, and may be connected to the positive electrode of the first battery cell P1 by using a BOOST device. If an operating voltage of the another electrical load is within a value range of [12 V, 18 V], the another electrical load is the first load 131, and may be connected to the positive electrode of the first battery cell P1 by using a buck-boost converter.

In this example, based on a premise of generating a voltage required by each load, a difference of voltages at two terminals of each voltage converter may be reduced as much as possible, thereby improving working efficiency of the voltage converter as much as possible, and further extending a battery life of the battery module.

FIG. 8 is a schematic diagram of a structure of another electronic device according to an embodiment of this application. FIG. 9 is a schematic diagram of a structure of still another electronic device according to an embodiment of this application. It should be noted that, in the laptop field, a laptop with a light weight, a small volume, and a moderate or relatively low performance requirement, such as a thin and light laptop, may use a power supply design solution of "2-series 1-parallel" shown in FIG. 8 or a power supply design solution of "2-series 2-parallel" shown in FIG. 9 as a power supply circuit of the laptop with a light weight, a small volume, and a moderate or relatively low performance requirement.

A difference between FIG. 8 and FIG. 7 lies in that a battery module 110 includes two battery cells connected in series, that is, a first battery cell P1 and a second battery cell P2 (namely, the power supply design solution of 2-series 1-parallel). In addition, in the electronic device shown in FIG. 8, a second load 132 includes a second sub-load 1302 and a third sub-load 1303. The second sub-load 1302 is connected to a positive electrode of the second battery cell P2 by using a second BUCK 122, and the third sub-load 1303 is connected to the positive electrode of the second battery cell P2 by using a third BUCK 123. It should be noted that for related content of the second load 132 in FIG. 8, refer to related descriptions of the fourth load 134 in FIG. 7 in the previous embodiment. Details are not described again.

In addition, a first load 131 may include a load with a large current peak value or a high dynamic response requirement, for example, a first sub-load 1301 in FIG. 8. Alternatively, when a voltage converter connected to the first load 131 includes a BUCK, an operating voltage of the first load 131 connected to the BUCK may be less than 6 V. For example, to further extend a battery life of the battery module, when a load at (0, 3 V) is connected to the positive electrode of the second battery cell P2 by using a BUCK, the operating voltage of the first load 131 may be within a range of [3 V, 6 V), for example, a fourth sub-load 1304 and a fifth sub-load 1305 in FIG. 8. Alternatively, when a voltage converter connected to the first load 131 includes a BOOST, an operating voltage of the first load 131 connected to the BOOST may be greater than 9 V, for example, a seventh sub-load 1307 in FIG. 8. A first battery voltage Vout1 may be boosted to 12 V by using a first BOOST 128. Alternatively, when a voltage converter connected to the first load 131 includes a buck-boost converter, an operating voltage of the first load 131 connected to the buck-boost converter may be greater than or equal to 6 V and less than or equal to 9 V, for example, a sixth sub-load 1306 in FIG. 8. When a first battery voltage Vout1 is lower than 7.3 V, the first battery voltage Vout1 is boosted to 7.3 V by using a second buck-boost converter 129, or when the first battery voltage Vout1 is higher than 7.3 V, the first battery voltage Vout1 is bucked to 7.3 V by using the second buck-boost converter 129.

It should be noted that for other content of the electronic device shown in FIG. 8, reference may be made to related descriptions of the foregoing part of this embodiment of this application with reference to FIG. 7. Details are not described again.

A difference between FIG. 9 and FIG. 7 lies in that a battery module 110 may include two parallel branches, and each parallel branch may include two battery cells connected in series. A negative electrode of a first battery cell P1 is connected to a positive electrode of a second battery cell P2 by using a node A3, and a negative electrode of a third battery cell P3 is connected to a positive electrode of a fourth battery cell P4 by using a node A4. In addition, in this embodiment of this application, the node A3 is connected to the node A4, and the node A4 is configured to output a second operating voltage Vout2.

In addition, for content such as a first load 131 and a second load 132 in the electronic device shown in FIG. 9, refer to related descriptions of the foregoing embodiment with reference to FIG. 8. Details are not described again.

FIG. 10 is a schematic diagram of a structure of yet another electronic device according to an embodiment of this application. A difference between FIG. 10 and FIG. 7 lies in that a battery module 110 may include three battery cells connected in series, namely, a first battery cell P1-a third battery cell P3 (namely, a power supply design solution of 3-series 1-parallel). In the laptop field, electrical energy between a performance ratio and the thin and light laptop may use a power supply design solution of "3-series 1-parallel" shown in FIG. 10 as a power supply circuit of the laptop.

In addition, a first load 131 in FIG. 10 is equivalent to the first load 131 and the second load 132 in FIG. 7. Correspondingly, the first load 131 may include a load with a large current peak value or a high dynamic response requirement. Alternatively, when a voltage converter connected to the first load 131 includes a BUCK, an operating voltage of the first load 131 connected to the BUCK may be less than 9 V. For example, to further extend a battery life of the battery module, when a load at (0, 3 V) is connected to a positive electrode of the third battery cell P3 by using the BUCK, and a load at [3, 6 V) is connected to a positive electrode of the second battery cell P2 by using the BUCK, the operating voltage of the first load 131 may be within a range of [6 V, 9 V). Alternatively, when a voltage converter connected to the first load 131 includes a BOOST, an operating voltage of the first load 131 connected to the BOOST may be greater than 13.5 V. Alternatively, when a voltage converter connected to the first load 131 includes a buck-boost converter, an operating voltage of the first load 131 connected to the buck-boost converter may be greater than or equal to 9 V and less than or equal to 13.5 V.

In addition, a second load 132 in FIG. 10 is equivalent to the third load 133 in FIG. 7, and a third load 133 in FIG. 10 is equivalent to the fourth load 134 in FIG. 7. For related content of the second load 132 and the third load 133 in FIG. 10, refer to related descriptions of the third load 133 and the fourth load 134 in FIG. 7 in the foregoing part of this embodiment of this application. Details are not described again.

FIG. 11 is a schematic diagram of a structure of yet another electronic device according to an embodiment of this application. A difference between FIG. 11 and FIG. 8 lies in that the electronic device may further include a first switch S1 and a second switch S2. A first BUCK 121 is connected to a positive electrode of a first battery cell P1 by using the first switch S1, and the first BUCK 121 is further connected to a positive electrode of a fourth battery cell P4 by using the second switch S2. The first switch S1 and the second switch S2 may be switch devices such as MOS transistors, and specific types thereof are not limited.

When a task load of a first sub-load 1301 is light, the second switch S2 is turned on, and the first switch S1 is turned off. In this case, the first BUCK 121 bucks a fourth battery voltage Vout4 to an operating voltage (for example, 0.6 V) of the first sub-load 1301.

When a task load of the first sub-load 1301 is heavy, the second switch S2 is turned off, and the first switch S1 is turned on. In this case, the first BUCK 121 reduces a first battery voltage Vout1 to an operating voltage (for example, 1.55 V) of the first sub-load 1301.

In this embodiment, when the task load of the first sub-load 1301 is heavy, load power of the first sub-load 1301 is very large, and a relatively fast dynamic response is required. In this case, the first switch S1 is turned on to supply power by using the first battery voltage Vout1. Because a voltage value of the first battery voltage Vout1 is relatively large, an input current can be reduced, and it is unnecessary to reduce cabling impedance in a manner such as widening cabling, thereby reducing wiring difficulty of a power supply and avoiding a safety risk of a large current. In addition, when the task load of the first sub-load 1301 is light, in this case, load power is relatively low, a speed requirement for a dynamic response is relatively low, and an input current is relatively low. In this case, in a manner of turning on the second switch S1 to supply power by using the fourth battery voltage Vout2, battery safety can be ensured, and electrical energy conversion efficiency of the first BUCK 121 is increased, thereby further extending a battery life of the battery module.

It should be noted that content in this embodiment of this application may be further combined with other content of the electronic device shown in other embodiments such as FIG. 8-FIG. 10. This is not specifically limited.

FIG. 12 is a schematic diagram of a structure of yet another electronic device according to an embodiment of this application. A difference from the electronic device shown in FIG. 7 lies in that the electronic device shown in FIG. 12 may further include an equalization circuit 150. The equalization circuit 150 is configured to perform electricity quantity equalization between a first battery cell P1-a fourth battery cell P4.

To reduce electricity quantity losses of a battery module, the equalization circuit 150 may perform electricity quantity equalization between a plurality of battery cells in an active equalization manner. For example, FIG. 13 is a schematic diagram of an active equalization process according to an embodiment of this application. For example, the battery module includes the first battery cell P1 and the second battery cell P2, if an electricity quantity of the first battery cell P1 is 80% and an electricity quantity of the second battery cell P2 is 60%, in an equalization process, 10% of the electricity quantity of the first battery cell P1 may be transferred to the second battery cell P2, so that the electricity quantities of both the first battery cell P1 and the second battery cell P2 reach 70%.

In an embodiment, FIG. 14 is a schematic diagram of a structure of an example equalization circuit according to an embodiment of this application. As shown in FIG. 14, the battery module includes the first battery cell P1-the third battery cell P3, and the equalization circuit 150 may include a first gate driver 151-a third gate driver 153, a first control switch Q1-a twelfth control switch Q12, and a first equalization capacitor C1-a third equalization capacitor C3. Each control switch may be implemented as a device such as a MOS transistor that has a switch function, for example, an NMOS transistor in FIG. 14. Correspondingly, in a case in which each control switch is an NMOS transistor, a control terminal of each control switch is a gate, a first connection terminal is a drain, and a second connection terminal is a source. It should be noted that each control switch may further use a PMOS transistor or another control switch other than the MOS transistor. In an example, because a voltage of each battery cell is relatively low and power handling of the equalization circuit is relatively small, each control switch may be implemented as a semiconductor switch device with small power, for example, a MOS transistor with a relatively small inter-electrode capacitance (in comparison with a MOS transistor used by a vehicle that uses a power battery as a power source, an inter-electrode capacitance of each control switch shown in FIG. 14 is relatively low). In addition, each equalization capacitor may select a ceramic capacitor with an ultra-low ESR (equivalent series resistance), so that each control switch can work at a higher switching frequency (for example, tens of kHz~hundreds of kHz), thereby implementing higher equalization efficiency.

Still referring to FIG. 14, both a control terminal of the first control switch Q1 and a control terminal of the second control switch Q2 are connected to a first control terminal of the first gate driver 151, and both a control terminal of the third control switch Q3 and a control terminal of the fourth control switch Q4 are connected to a second control terminal of the first gate driver 151. Both a control terminal of the fifth control switch Q5 and a control terminal of the sixth control switch Q6 are connected to a first control terminal of the second gate driver 152, and both a control terminal of the seventh control switch Q7 and a control terminal of the eighth control switch Q8 are connected to a second control terminal of the second gate driver 152. Both a control terminal of the ninth control switch Q9 and a control terminal of the tenth control switch Q10 are connected to a first control terminal of the third gate driver 153, and both a control terminal of the eleventh control switch Q11 and a control terminal of the twelfth control switch Q12 are connected to a second control terminal of the third gate driver 153. The first control terminal of each of the first gate driver 151-the third gate driver 153 is configured to output a first drive signal HO, and the second control terminal thereof is configured to output a second drive signal LO. For each gate driver, the gate driver may receive a control signal of a control module (such as a CPU or an SOC), and perform voltage modulation on the control signal to generate the first drive signal HO and the second drive signal LO that are at reverse levels.

In addition, a first connection terminal of the first control switch Q1 is connected to a positive electrode of the first battery cell P1, and a second connection terminal of the first control switch Q1 is connected to a first connection terminal of the third control switch Q3. A second connection terminal of the third control switch Q3 is connected to a second connection terminal of the seventh control switch Q7 and a second connection terminal of the eleventh control switch Q11.

A first connection terminal of the second control switch Q2 is connected to a negative electrode of the first battery cell P1, a second connection terminal of the second control switch Q2 is connected to a first connection terminal of the fourth control switch Q4, and a second connection terminal of the fourth control switch Q4 is grounded GND.

A first connection terminal of the fifth control switch Q5 is connected to a positive electrode of the second battery cell P2, and a second connection terminal of the fifth control switch Q5 is connected to a first connection terminal of the seventh control switch Q7.

A first connection terminal of the sixth control switch Q6 is connected to a negative electrode of the second battery cell P2, a second connection terminal of the sixth control switch Q6 is connected to a first connection terminal of the eighth control switch Q8, and a second connection terminal of the eighth control switch Q8 is grounded GND.

A first connection terminal of the ninth control switch Q9 is connected to a positive electrode of the third battery cell P3, and a second connection terminal of the ninth control switch Q9 is connected to a first connection terminal of the eleventh control switch Q11.

A first connection terminal of the tenth control switch Q10 is connected to a negative electrode of the third battery cell P3, a second connection terminal of the tenth control switch Q10 is connected to a first connection terminal of the twelfth control switch Q12, and a second connection terminal of the twelfth control switch Q12 is grounded GND.

One end of the first equalization capacitor C1 is separately connected to the second connection terminal of the first control switch Q1 and the first connection terminal of the third control switch Q3, and the other end of the first equalization capacitor C1 is separately connected to the second connection terminal of the second control switch Q2 and the first connection terminal of the fourth control switch Q4.

One end of the second equalization capacitor C2 is separately connected to the second connection terminal of the fifth control switch Q5 and the first connection terminal of the seventh control switch Q7, and the other end of the second equalization capacitor C2 is separately connected to the second connection terminal of the sixth control switch Q6 and the first connection terminal of the eighth control switch Q8.

One end of the third equalization capacitor C3 is separately connected to the second connection terminal of the ninth control switch Q9 and the first connection terminal of the eleventh control switch Q11, and the other end of the third equalization capacitor C3 is separately connected to the second connection terminal of the tenth control switch Q10 and the first connection terminal of the twelfth control switch Q12.

In this embodiment of this application, the equalization process may include a first equalization phase D1 and a second equalization phase D2 that are alternately performed. For example, FIG. 15 is a schematic diagram of an example drive signal according to an embodiment of this application.

In the first equalization phase D1, the first drive signal HO is at a high level, and the second drive signal LO is at a low level. In this case, the first control switch Q1, the second control switch Q2, the fifth control switch Q5, the sixth control switch Q6, the ninth control switch Q9, and the tenth control switch Q10 are turned on, and the remaining control switches are turned off. In this case, in the first equalization phase D1, an equivalent circuit of the equalization circuit is shown in FIG. 16. FIG. 16 is a diagram of an equivalent circuit of an example equalization circuit according to an embodiment of this application. As shown in FIG. 16, in the first equalization phase, the first equalization capacitor C1 is connected in parallel to two ends of the first battery cell P1, the second equalization capacitor C2 is connected in parallel to two ends of the second battery cell P2, and the third equalization capacitor C3 is connected in parallel to two ends of the third battery cell P3. In this phase, the battery cell and the equalization capacitor charge or discharge each other until a voltage of the equalization capacitor is equal to a voltage of a connected battery.

In the second equalization phase D2, the first drive signal HO is at a low level, and the second drive signal LO is at a high level. In this case, the third control switch Q3, the fourth control switch Q4, the seventh control switch Q7, the eighth control switch Q8, the eleventh control switch Q11, and the twelfth control switch Q12 are turned on, and the other control switches are turned off. In this case, in the second equalization phase D2, an equivalent circuit of the equalization circuit is shown in FIG. 17. FIG. 17 is a diagram of an equivalent circuit of another example equalization circuit according to an embodiment of this application. Because the second connection terminal of the third control switch, the second connection terminal of the seventh control switch Q7, and the second connection terminal of the eleventh control switch Q11 are connected, the second connection terminal of the fourth control switch Q4, the second connection terminal of the eighth control switch Q8, and the second connection terminal of the twelfth control switch Q12 are all grounded. Correspondingly, as shown in FIG. 17, in the second equalization phase D2, the first equalization capacitor C1-the third equalization capacitor C3 are connected in parallel.

In the first equalization phase D1, an excess capacitor of each battery cell may be transferred to an equalization capacitor connected to the battery cell, and each battery cell may obtain a lacking electricity quantity from the connected equalization capacitor. In the second equalization phase D2, an electricity quantity transfer may be performed between the equalization capacitors, and an electricity quantity of an equalization capacitor with a relatively large electricity quantity may be transferred to an equalization capacitor with a relatively small electricity quantity. Electricity quantity equalization between a plurality of battery cells can be dynamically performed by alternately performing the first equalization phase D1 and the second equalization phase D2.

In some embodiments, a switching frequency of each control switch is positively correlated with a battery cell voltage difference of the battery module. In an example, a control module may detect a battery cell voltage difference of the battery module. For example, the control module may detect a voltage value of each battery cell in the battery module, and use a difference between a maximum voltage value and a minimum voltage value as the battery cell voltage difference of the battery module. In addition, the control module may determine a target switching frequency corresponding to the battery cell voltage difference. In addition, the control module generates a control signal (for example, a pulse width modulation (Pulse Width Modulation, PWM) signal), and sends the control signal to each gate driver, and a signal frequency of the control signal is the same as the target switching frequency. Each gate controller generates the first drive signal HO and the second drive signal LO based on the control signal. Signal frequencies of the first drive signal HO and the second drive signal LO are the same as the target switching frequency, so that each control switch is controlled, by using the first drive signal HO and the second drive signal LO, to turn on or turn off based on the target switching frequency. Optionally, the control module may determine the target switching frequency according to a preset correspondence (for example, a correspondence table or a correspondence curve) between a switching frequency and a battery cell voltage difference. Alternatively, when the battery cell voltage difference is greater than a voltage difference threshold, a first switching frequency (high frequency) may be selected as the target switching frequency, or when the battery cell voltage difference is less than or equal to the voltage difference threshold, a second switching frequency (low frequency) may be selected as the target switching frequency, and the second switching frequency is less than the first switching frequency. A specific manner of the target switching frequency is not limited in this embodiment of this application.

It should be noted that the inventors found, through researching, that a higher switching frequency of each control switch indicates a better equalization effect, and higher equalization losses caused by the gate driver and the like. In this embodiment, when the voltage difference is relatively large, an equalization speed may be increased and an equalization effect may be improved in a manner of increasing the switching frequency. When the voltage difference is relatively small, equalization losses are reduced by reducing the switching frequency, to further extend a battery life of the battery module, thereby considering both the equalization efficiency and the battery life.

In addition, the inventors found, through researching, that equalization losses (for example, charging/discharging losses of a capacitor and driving losses of a MOS transistor) and the like are generated in the equalization process, and the equalization losses need to be less than power consumption saved by the voltage converter in this embodiment of this application, to ensure that the overall electricity quantity utilization of the battery module is improved. The inventors proved, through experiments, that when a switching frequency of each equalization switch is at several kHz, compared with the power consumption saved in the solution in this embodiment of this application, the equalization losses have an overall positive benefit is positive, thereby extending a battery life.

In some embodiments, a selected type of the control switch in the equalization circuit and a capacitance parameter of the equalization capacitor may be further determined based on losses of the equalization circuit. For example, equalization parameters such as a selected type of the control switch, the switching frequency, and a capacitance value of the equalization capacitor may be determined based on loss parameters such as a cabling width and an impedance and equalization parameters such as an equalization rate of a demo (Demo) of the electronic device. For example, a higher capacitance value of the equalization capacitor indicates a higher equalization rate. For another example, a smaller on-resistance (Rdson) of the control switch indicates smaller on-losses, but a larger inter-electrode capacitance of the control switch indicates larger switch losses. Therefore, the selected type of the control switch needs to strike a balance between on-losses and switch losses, to select an optimal value in the middle, to obtain highest overall efficiency. For another example, a higher switching frequency of the control switch indicates a faster equalization speed, but also causes increased drive losses. On the contrary, a lower switching frequency can reduce drive losses and also reduce an equalization speed. Therefore, a balance can be achieved between the two through debugging.

In some embodiments, FIG. 18 is a schematic diagram of a structure of yet another electronic device according to an embodiment of this application. A difference from FIG. 12 lies in that the electronic device shown in FIG. 18 further includes a third switch S3 to an eighth switch S8. The third switch S3-the eighth switch S8 may be implemented as switch elements such as MOS transistors. This is not specifically limited.

Both one end of the third switch S3 and one end of the sixth switch S6 are connected to a node B1, the other end of the third switch S3 is connected to a positive electrode of a second battery cell P2, and the other end of the sixth switch S6 is connected to a positive electrode of a first battery cell P1. An input terminal of a sixth BUCK 126 is connected to the node B1.

Both one end of the fourth switch S4 and one end of the seventh switch S7 are connected to a node B2, the other end of the fourth switch S4 is connected to a positive electrode of a third battery cell P3, and the other end of the seventh switch S7 is connected to the positive electrode of the first battery cell P1. An input terminal of a fourth BUCK 124 and an input terminal of a fifth BUCK 125 are connected to the node B2.

Both one end of the fifth switch S5 and one end of the eighth switch S8 are connected to a node B3, the other end of the fifth switch S5 is connected to a positive electrode of a fourth battery cell P4, and the other end of the eighth switch S8 is connected to the positive electrode of the first battery cell P1. An input terminal of the second BUCK 122 and an input terminal of the third BUCK 123 are connected to the node B3.

In a normal power supply case, the third switch S3-the fifth switch S5 are turned on, and the sixth switch S6-the eighth switch S8 are turned off. In addition, in a case in which a voltage difference between the second battery cell P2 and another battery cell is greater than or equal to a preset voltage difference threshold, the third switch S3 is turned off, and the sixth switch S6 is turned on, to prevent a sixth sub-load 1306 from further increasing a voltage difference between the second battery cell P2 and the first battery cell P1, thereby improving voltage equalization efficiency.

In addition, in a case in which a voltage difference between the third battery cell P3 and another battery cell is greater than or equal to the preset voltage difference threshold, the fourth switch S4 is turned off, and the seventh switch S7 is turned on, to prevent a fourth sub-load 1304 and a fifth sub-load 1305 from further increasing the voltage difference between the third battery cell P3 and the another battery cell, thereby improving equalization efficiency. Alternatively, in a case in which a voltage difference between the third battery cell P3 and another battery cell is greater than or equal to the preset voltage difference threshold, the third switch S3 may alternatively be controlled to turn off, and the sixth switch S6 may alternatively be controlled to turn on. It should be noted that the fourth sub-load 1304 and the fifth sub-load 1305 may alternatively be connected to the positive electrode of the second battery cell P2 by using another switch, so that when a voltage difference of the third battery cell P3 is extremely large, a third load may be further chosen to be hung to the second battery cell P2 in addition to being able to choose to hang the third load to the positive electrode of the first battery cell P1. This is not specifically limited.

In addition, in a case in which a voltage difference between the fourth battery cell P4 and another battery cell is greater than or equal to the preset voltage difference threshold, the fifth switch S5 is turned off, and the eighth switch S8 is turned on, to prevent a second sub-load 1302 and the third sub-load 1303 from further increasing the voltage difference between the fourth battery cell P4 and the another battery cell, thereby improving equalization efficiency. Alternatively, in a case in which a voltage difference between the fourth battery cell P4 and another battery cell is greater than or equal to the preset voltage difference threshold, the third switch S3 may alternatively be controlled to turn off, and the sixth switch S6 may alternatively be controlled to turn on. Alternatively, the fourth switch S4 may alternatively be controlled to turn off, and the seventh switch S7 may alternatively be controlled to turn on, to further improve an equalization effect. It should be noted that the second sub-load 1302 and the third sub-load 1303 may alternatively be connected to the positive electrode of the second battery cell P2 or the third battery cell P3 by using another switch, so that when a voltage difference of the fourth battery cell P4 is extremely large, a fourth load may be further chosen to be hung to the second battery cell P2 or the third battery cell P3 in addition to being able to choose to hang the fourth load to the positive electrode of the first battery cell P1. This is not specifically limited.

Alternatively, when an equalization speed is relatively slow, the equalization speed may be increased by using the foregoing switch switching process. For example, an equalization speed decreases as a voltage difference between battery cells gradually decreases. By using the foregoing switch switching process, for example, in a case in which a voltage difference between the second battery cell P2 and the first battery cell P1 is less than a voltage difference threshold, the sixth switch S6 is controlled to turn on and the third switch S3 is controlled to turn off, to increase the equalization speed. It should be noted that in this process, for a load that needs to be hung to another battery cell, for example, the fourth load, a voltage converter connected to the fourth load may be connected to the second battery cell P2 or the third battery cell P3 based on an actual situation and a specific requirement in addition to being connected to the fourth battery cell P4. This is not specifically limited.

In the embodiments, power consumption of the battery cells in the battery module is different. For example, the first battery cell P1-the fourth battery cell P4 is used as an example. The first battery cell P1 needs to provide an electricity quantity for only the first load 131, the second battery cell P2 needs to provide electricity quantities for the first load 131 and the second load 132, the third battery cell P3 needs to provide electricity quantities for the first load 131-the third load 133, the fourth battery cell P4 needs to provide electricity quantities for the first load 131-the fourth load 134, and power consumption of the first battery cell P1-the fourth battery cell P4 gradually increases. Correspondingly, the battery cells may generate a voltage difference due to a difference in the power consumption, and consequently risks such as a short-circuit are further caused due to the voltage difference. Therefore, by disposing the equalization circuit, a voltage difference between the battery cells can be reduced, and power supply safety is improved. In addition, when an active equalization circuit shown in FIG. 14 is selected, heat consumption is reduced because electrical energy of the active equalization circuit is stored in the capacitor. In addition, an active equalization current is relatively large, and an equalization rate is relatively high, thereby increasing an equalization rate while extending a battery life. Alternatively, passive equalization may alternatively be selected based on an actual situation and a specific requirement. This is not specifically limited.

It should be noted that this equalization solution is also applicable to other power supply design solutions of "4-series 1-parallel", "2-series 1-parallel", and "2-series 2-parallel". For example, in the solutions of "2-series 1-parallel" and "2-series 2-parallel", the equalization circuit may include a first equalization capacitor C1 and a second equalization capacitor C2, a first control switch Q1-an eighth control switch Q8, and a first gate driver 151 and a second gate driver 152. For another example, in the solution of "4-series 1-parallel", the equalization circuit may include a first equalization capacitor C1-a fourth equalization capacitor C4, a first control switch Q1-a sixteenth control switch Q16, and a first gate driver 151-a fourth gate driver 154. A specific circuit structure and an equalization process of the equalization circuit are similar to those of the foregoing equalization circuit. Details are not described again.

The foregoing embodiments are merely intended to describe the technical solutions in this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the scope of the technical solutions in the embodiments of this application.

## Claims

1. A power supply circuit, wherein the power supply circuit is disposed in an electronic device, and the power supply circuit comprises:
a battery module, wherein the battery module comprises at least one power supply branch, each power supply branch comprises a first battery cell and a second battery cell, a negative electrode of the first battery cell in each power supply branch is connected to a positive electrode of the second battery cell, a positive electrode of the first battery cell is configured to output a first battery voltage, and the positive electrode of the second battery cell is configured to output a second battery voltage;
a first voltage converter, wherein an input terminal of the first voltage converter is connected to the positive electrode of the first battery cell, an output terminal of the first voltage converter is configured to connect to a first load, and the first voltage converter is configured to convert the first battery voltage into a first operating voltage, and output the first operating voltage to the first load; and
a second voltage converter, wherein an input terminal of the second voltage converter is connected to the positive electrode of the second battery cell, an output terminal of the second voltage converter is configured to connect to a second load, and the second voltage converter is configured to convert the second battery voltage into a second operating voltage, and output the second operating voltage to the second load, wherein
a first absolute difference between the second battery voltage and the second operating voltage is less than a second absolute difference between the first battery voltage and the second operating voltage.

2. The power supply circuit according to claim 1, wherein each power supply branch further comprises a third battery cell, wherein a positive electrode of the third battery cell is connected to a negative electrode of the second battery cell, and the positive electrode of the third battery cell is configured to output a third battery voltage; and
the power supply circuit further comprises:
a third voltage converter, wherein an input terminal of the third voltage converter is connected to the positive electrode of the third battery cell, an output terminal of the third voltage converter is configured to connect to a third load, and the third voltage converter is configured to convert the third battery voltage into a third operating voltage, and output the third operating voltage to the third load, wherein
a third absolute difference between the third battery voltage and the third operating voltage is less than a fourth absolute difference between the second battery voltage and the third operating voltage.

3. The power supply circuit according to claim 2, wherein
the second voltage converter comprises a first buck converter, and the second operating voltage is less than a minimum voltage value of the second battery voltage and greater than or equal to a minimum voltage value of the third battery voltage; and
the third voltage converter comprises a second buck converter, and the third operating voltage is less than the minimum voltage value of the third battery voltage.

4. The power supply circuit according to claim 2, wherein each power supply branch further comprises a fourth battery cell, wherein a positive electrode of the fourth battery cell is connected to a negative electrode of the third battery cell, and the positive electrode of the fourth battery cell is configured to input a fourth battery voltage; and
the power supply circuit further comprises:
a fourth voltage converter, wherein an input terminal of the fourth voltage converter is connected to the positive electrode of the fourth battery cell, an output terminal of the fourth voltage converter is configured to connect to a fourth load, and the fourth voltage converter is configured to convert the fourth battery voltage into a fourth operating voltage, and output the fourth operating voltage to the fourth load, wherein
a sixth absolute difference between the fourth battery voltage and the fourth operating voltage is less than a seventh absolute difference between the first battery voltage and the fourth battery voltage.

5. The power supply circuit according to claim 4, wherein
the second voltage converter comprises a first buck converter, and the second operating voltage is less than a minimum voltage value of the second battery voltage and greater than or equal to a minimum voltage value of the third battery voltage;
the third voltage converter comprises a second buck converter, and the third operating voltage is less than the minimum voltage value of the third battery voltage and greater than or equal to a minimum voltage value of the fourth battery voltage; and
the fourth voltage converter comprises a third buck converter, and the fourth operating voltage is less than the minimum voltage value of the fourth battery voltage.

6. The power supply circuit according to claim 1, wherein the first load comprises a first sub-load, the second load comprises a second sub-load, and both an operating voltage of the first sub-load and an operating voltage of the second sub-load are less than the second battery voltage; and
a load current of the first sub-load is greater than a load current of the second sub-load, and/or a dynamic response rate of the first sub-load is greater than a dynamic response rate of the second sub-load.

7. The power supply circuit according to claim 1, wherein the first load comprises a first sub-load, the first voltage converter comprises a first voltage conversion element, the first voltage conversion element is configured to connect to the first sub-load, and the power supply circuit further comprises:
a first switch, wherein a first connection terminal of the first switch is connected to the positive electrode of the first battery cell, and a second connection terminal of the first switch is connected to an input terminal of the first voltage conversion element; and
a second switch, wherein a first connection terminal of the second switch is connected to the positive electrode of the second battery cell, and a second connection terminal of the second switch is connected to the input terminal of the first voltage conversion element, wherein
when the first sub-load is in a first state, the first switch is turned on, and the second switch is turned off; or
when the first sub-load is in a second state, the first switch is turned off, and the second switch is turned on.

8. The power supply circuit according to any one of claims 1-7, wherein
the power supply circuit further comprises an equalization circuit, and the equalization circuit is separately connected to the first battery cell and the second battery cell, to perform electricity quantity equalization on the first battery cell and the second battery cell.

9. The power supply circuit according to claim 8, wherein the equalization circuit comprises:
a first control switch, wherein a first connection terminal of the first control switch is connected to the positive electrode of the first battery cell, and a second connection terminal of the first control switch is connected to a first connection terminal of a third control switch;
a second control switch, wherein a first connection terminal of the second control switch is connected to the negative electrode of the first battery cell, and a second connection terminal of the second control switch is connected to a first connection terminal of a fourth control switch;
the third control switch, wherein a second connection terminal of the third control switch is connected to a second connection terminal of a seventh control switch;
the fourth control switch, wherein a second connection terminal of the fourth control switch is grounded;
a fifth control switch, wherein a first connection terminal of the fifth control switch is connected to the positive electrode of the second battery cell, and a second connection terminal of the fifth control switch is connected to a first connection terminal of the seventh control switch;
a sixth control switch, wherein a first connection terminal of the sixth control switch is connected to the negative electrode of the second battery cell, and a second connection terminal of the sixth control switch is connected to a first connection terminal of an eighth control switch;
the seventh control switch;
the eighth control switch, wherein a second connection terminal of the eighth control switch is grounded;
a first equalization capacitor, wherein a first terminal of the first equalization capacitor is separately connected to the second connection terminal of the first control switch and the first connection terminal of the third control switch, and a second terminal of the first equalization capacitor is separately connected to the second connection terminal of the second control switch and the first connection terminal of the fourth control switch; and
a second equalization capacitor, wherein a first terminal of the second equalization capacitor is separately connected to the second connection terminal of the fifth control switch and the first connection terminal of the seventh control switch, and a second terminal of the second equalization capacitor is separately connected to the second connection terminal of the sixth control switch and the first connection terminal of the eighth control switch, wherein
a first equalization phase and a second equalization phase are alternately entered in an equalization process of the equalization circuit; in the first equalization phase, the first control switch, the second control switch, the fifth control switch, and the sixth control switch are turned on, and the third control switch, the fourth control switch, the seventh control switch, and the eighth control switch are turned off; and in the second equalization phase, the first control switch, the second control switch, the fifth control switch, and the sixth control switch are turned off, and the third control switch, the fourth control switch, the seventh control switch, and the eighth control switch are turned on.

10. The power supply circuit according to claim 9, wherein
switching frequencies of the first control switch to the eighth control switch are positively correlated with a voltage difference between the first battery cell and the second battery cell.

11. A power supply circuit, wherein the power supply circuit is disposed in an electronic device, and the power supply circuit comprises:
a battery module, wherein the battery module comprises at least one power supply branch, each power supply branch comprises a first battery cell and a second battery cell, a negative electrode of the first battery cell in each power supply branch is connected to a positive electrode of the second battery cell, a positive electrode of the first battery cell is configured to output a first battery voltage, and the positive electrode of the second battery cell is configured to output a second battery voltage;
a first voltage converter, wherein an input terminal of the first voltage converter is connected to the positive electrode of the first battery cell, an output terminal of the first voltage converter is configured to connect to a first load, and the first voltage converter is configured to convert the first battery voltage into a first operating voltage, and output the first operating voltage to the first load; and
a second voltage converter, wherein an input terminal of the second voltage converter is connected to the positive electrode of the second battery cell, an output terminal of the second voltage converter is configured to connect to a second load, and the second voltage converter is configured to convert the second battery voltage into a second operating voltage, and output the second operating voltage to the second load, wherein
a first absolute difference between the second battery voltage and the second operating voltage is less than a second absolute difference between the first battery voltage and the second operating voltage;
each power supply branch further comprises a third battery cell, wherein a positive electrode of the third battery cell is connected to a negative electrode of the second battery cell, and the positive electrode of the third battery cell is configured to output a third battery voltage; and
the power supply circuit further comprises:
a third voltage converter, wherein an input terminal of the third voltage converter is connected to the positive electrode of the third battery cell, an output terminal of the third voltage converter is configured to connect to a third load, and the third voltage converter is configured to convert the third battery voltage into a third operating voltage, and output the third operating voltage to the third load, wherein
a third absolute difference between the third battery voltage and the third operating voltage is less than a fourth absolute difference between the second battery voltage and the third operating voltage;
the second voltage converter comprises a first buck converter, and the second operating voltage is less than a minimum voltage value of the second battery voltage and greater than or equal to a minimum voltage value of the third battery voltage; and
the third voltage converter comprises a second buck converter, and the third operating voltage is less than the minimum voltage value of the third battery voltage.

12. The power supply circuit according to claim 11, wherein each power supply branch further comprises a fourth battery cell, wherein a positive electrode of the fourth battery cell is connected to a negative electrode of the third battery cell, and the positive electrode of the fourth battery cell is configured to input a fourth battery voltage; and
the power supply circuit further comprises:
a fourth voltage converter, wherein an input terminal of the fourth voltage converter is connected to the positive electrode of the fourth battery cell, an output terminal of the fourth voltage converter is configured to connect to a fourth load, and the fourth voltage converter is configured to convert the fourth battery voltage into a fourth operating voltage, and output the fourth operating voltage to the fourth load, wherein
a sixth absolute difference between the fourth battery voltage and the fourth operating voltage is less than a seventh absolute difference between the first battery voltage and the fourth battery voltage.

13. The power supply circuit according to claim 12, wherein
the second voltage converter comprises a first buck converter, and the second operating voltage is less than a minimum voltage value of the second battery voltage and greater than or equal to a minimum voltage value of the third battery voltage;
the third voltage converter comprises a second buck converter, and the third operating voltage is less than the minimum voltage value of the third battery voltage and greater than or equal to a minimum voltage value of the fourth battery voltage; and
the fourth voltage converter comprises a third buck converter, and the fourth operating voltage is less than the minimum voltage value of the fourth battery voltage.

14. The power supply circuit according to claim 11, wherein the first load comprises a first sub-load, the second load comprises a second sub-load, and both an operating voltage of the first sub-load and an operating voltage of the second sub-load are less than the second battery voltage; and
a load current of the first sub-load is greater than a load current of the second sub-load, and/or a dynamic response rate of the first sub-load is greater than a dynamic response rate of the second sub-load.

15. The power supply circuit according to claim 11, wherein the first load comprises a first sub-load, the first voltage converter comprises a first voltage conversion element, the first voltage conversion element is configured to connect to the first sub-load, and the power supply circuit further comprises:
a first switch, wherein a first connection terminal of the first switch is connected to the positive electrode of the first battery cell, and a second connection terminal of the first switch is connected to an input terminal of the first voltage conversion element; and
a second switch, wherein a first connection terminal of the second switch is connected to the positive electrode of the second battery cell, and a second connection terminal of the second switch is connected to the input terminal of the first voltage conversion element, wherein
when the first sub-load is in a first state, the first switch is turned on, and the second switch is turned off; or
when the first sub-load is in a second state, the first switch is turned off, and the second switch is turned on.

16. The power supply circuit according to any one of claims 11-15, wherein
the power supply circuit further comprises an equalization circuit, and the equalization circuit is separately connected to the first battery cell and the second battery cell, to perform electricity quantity equalization on the first battery cell and the second battery cell.

17. The power supply circuit according to claim 16, wherein the equalization circuit comprises:
a first control switch, wherein a first connection terminal of the first control switch is connected to the positive electrode of the first battery cell, and a second connection terminal of the first control switch is connected to a first connection terminal of a third control switch;
a second control switch, wherein a first connection terminal of the second control switch is connected to the negative electrode of the first battery cell, and a second connection terminal of the second control switch is connected to a first connection terminal of a fourth control switch;
the third control switch, wherein a second connection terminal of the third control switch is connected to a second connection terminal of a seventh control switch;
the fourth control switch, wherein a second connection terminal of the fourth control switch is grounded;
a fifth control switch, wherein a first connection terminal of the fifth control switch is connected to the positive electrode of the second battery cell, and a second connection terminal of the fifth control switch is connected to a first connection terminal of the seventh control switch;
a sixth control switch, wherein a first connection terminal of the sixth control switch is connected to the negative electrode of the second battery cell, and a second connection terminal of the sixth control switch is connected to a first connection terminal of an eighth control switch;
the seventh control switch;
the eighth control switch, wherein a second connection terminal of the eighth control switch is grounded;
a first equalization capacitor, wherein a first terminal of the first equalization capacitor is separately connected to the second connection terminal of the first control switch and the first connection terminal of the third control switch, and a second terminal of the first equalization capacitor is separately connected to the second connection terminal of the second control switch and the first connection terminal of the fourth control switch; and
a second equalization capacitor, wherein a first terminal of the second equalization capacitor is separately connected to the second connection terminal of the fifth control switch and the first connection terminal of the seventh control switch, and a second terminal of the second equalization capacitor is separately connected to the second connection terminal of the sixth control switch and the first connection terminal of the eighth control switch, wherein
a first equalization phase and a second equalization phase are alternately entered in an equalization process of the equalization circuit; in the first equalization phase, the first control switch, the second control switch, the fifth control switch, and the sixth control switch are turned on, and the third control switch, the fourth control switch, the seventh control switch, and the eighth control switch are turned off; and in the second equalization phase, the first control switch, the second control switch, the fifth control switch, and the sixth control switch are turned off, and the third control switch, the fourth control switch, the seventh control switch, and the eighth control switch are turned on.

18. The power supply circuit according to claim 17, wherein
switching frequencies of the first control switch to the eighth control switch are positively correlated with a voltage difference between the first battery cell and the second battery cell.

19. A power supply circuit, wherein the power supply circuit is disposed in an electronic device, and the power supply circuit comprises:
a battery module, wherein the battery module comprises at least one power supply branch, each power supply branch comprises a first battery cell, a second battery cell, and a third battery cell, a negative electrode of the first battery cell in each power supply branch is connected to a positive electrode of the second battery cell, a negative electrode of the second battery cell is connected to a positive electrode of the third battery cell, a positive electrode of the first battery cell is configured to output a first battery voltage, the positive electrode of the second battery cell is configured to output a second battery voltage, and the positive electrode of the third battery cell is configured to output a third battery voltage;
a first voltage converter, wherein an input terminal of the first voltage converter is connected to the positive electrode of the first battery cell, an output terminal of the first voltage converter is configured to connect to a first load, and the first voltage converter is configured to convert the first battery voltage into a first operating voltage, and output the first operating voltage to the first load;
a second voltage converter, wherein an input terminal of the second voltage converter is connected to the positive electrode of the second battery cell, an output terminal of the second voltage converter is configured to connect to a second load, and the second voltage converter is configured to convert the second battery voltage into a second operating voltage, and output the second operating voltage to the second load; and
a third voltage converter, wherein an input terminal of the third voltage converter is connected to the positive electrode of the third battery cell, an output terminal of the third voltage converter is configured to connect to a third load, and the third voltage converter is configured to convert the third battery voltage into a third operating voltage, and output the third operating voltage to the third load, wherein
the second voltage converter comprises a first buck converter, and the second operating voltage is less than a minimum voltage value of the second battery voltage and greater than or equal to a minimum voltage value of the third battery voltage; and
the third voltage converter comprises a second buck converter, and the third operating voltage is less than the minimum voltage value of the third battery voltage.

20. The power supply circuit according to claim 19, wherein a first absolute difference between the second battery voltage and the second operating voltage is less than a second absolute difference between the first battery voltage and the second operating voltage.

21. The power supply circuit according to claim 19 or 20, wherein the first absolute difference between the second battery voltage and the second operating voltage is less than the second absolute difference between the first battery voltage and the second operating voltage.

22. The power supply circuit according to claim 19, wherein each power supply branch further comprises a fourth battery cell, wherein a positive electrode of the fourth battery cell is connected to a negative electrode of the third battery cell, and the positive electrode of the fourth battery cell is configured to input a fourth battery voltage; and
the power supply circuit further comprises:
a fourth voltage converter, wherein an input terminal of the fourth voltage converter is connected to the positive electrode of the fourth battery cell, an output terminal of the fourth voltage converter is configured to connect to a fourth load, and the fourth voltage converter is configured to convert the fourth battery voltage into a fourth operating voltage, and output the fourth operating voltage to the fourth load, wherein
a sixth absolute difference between the fourth battery voltage and the fourth operating voltage is less than a seventh absolute difference between the first battery voltage and the fourth battery voltage.

23. The power supply circuit according to claim 22, wherein
the third operating voltage is less than the minimum voltage value of the third battery voltage and greater than or equal to a minimum voltage value of the fourth battery voltage; and
the fourth voltage converter comprises a third buck converter, and the fourth operating voltage is less than the minimum voltage value of the fourth battery voltage.

24. The power supply circuit according to claim 19, wherein the first load comprises a first sub-load, the second load comprises a second sub-load, and both an operating voltage of the first sub-load and an operating voltage of the second sub-load are less than the second battery voltage; and
a load current of the first sub-load is greater than a load current of the second sub-load, and/or a dynamic response rate of the first sub-load is greater than a dynamic response rate of the second sub-load.

25. The power supply circuit according to claim 19, wherein the first load comprises a first sub-load, the first voltage converter comprises a first voltage conversion element, the first voltage conversion element is configured to connect to the first sub-load, and the power supply circuit further comprises:
a first switch, wherein a first connection terminal of the first switch is connected to the positive electrode of the first battery cell, and a second connection terminal of the first switch is connected to an input terminal of the first voltage conversion element; and
a second switch, wherein a first connection terminal of the second switch is connected to the positive electrode of the second battery cell, and a second connection terminal of the second switch is connected to the input terminal of the first voltage conversion element, wherein
when the first sub-load is in a first state, the first switch is turned on, and the second switch is turned off; or
when the first sub-load is in a second state, the first switch is turned off, and the second switch is turned on.

26. The power supply circuit according to any one of claims 19-25, wherein
the power supply circuit further comprises an equalization circuit, and the equalization circuit is separately connected to the first battery cell, the second battery cell, and the third battery cell, to perform electricity quantity equalization on the first battery cell and the second battery cell.

27. The power supply circuit according to claim 26, wherein the equalization circuit comprises:
a first control switch, wherein a first connection terminal of the first control switch is connected to the positive electrode of the first battery cell, and a second connection terminal of the first control switch is connected to a first connection terminal of a third control switch;
a second control switch, wherein a first connection terminal of the second control switch is connected to the negative electrode of the first battery cell, and a second connection terminal of the second control switch is connected to a first connection terminal of a fourth control switch;
the third control switch, wherein a second connection terminal of the third control switch is connected to a second connection terminal of a seventh control switch;
the fourth control switch, wherein a second connection terminal of the fourth control switch is grounded;
a fifth control switch, wherein a first connection terminal of the fifth control switch is connected to the positive electrode of the second battery cell, and a second connection terminal of the fifth control switch is connected to a first connection terminal of the seventh control switch;
a sixth control switch, wherein a first connection terminal of the sixth control switch is connected to the negative electrode of the second battery cell, and a second connection terminal of the sixth control switch is connected to a first connection terminal of an eighth control switch;
the seventh control switch;
the eighth control switch, wherein a second connection terminal of the eighth control switch is grounded;
a ninth control switch, wherein a first connection terminal of the ninth control switch is connected to the positive electrode of the third battery cell, and a second connection terminal of the ninth control switch is connected to a first connection terminal of an eleventh control switch;
a tenth control switch, wherein a first connection terminal of the tenth control switch is connected to the negative electrode of the third battery cell, and a second connection terminal of the tenth control switch is connected to a first connection terminal of a twelfth control switch;
the eleventh control switch;
the twelfth control switch, wherein a second connection terminal of the twelfth control switch is grounded;
a first equalization capacitor, wherein a first terminal of the first equalization capacitor is separately connected to the second connection terminal of the first control switch and the first connection terminal of the third control switch, and a second terminal of the first equalization capacitor is separately connected to the second connection terminal of the second control switch and the first connection terminal of the fourth control switch;
a second equalization capacitor, wherein a first terminal of the second equalization capacitor is separately connected to the second connection terminal of the fifth control switch and the first connection terminal of the seventh control switch, and a second terminal of the second equalization capacitor is separately connected to the second connection terminal of the sixth control switch and the first connection terminal of the eighth control switch; and
a third equalization capacitor, wherein a first terminal of the third equalization capacitor is separately connected to the second connection terminal of the ninth control switch and the first connection terminal of the eleventh control switch, and a second terminal of the third equalization capacitor is separately connected to the second connection terminal of the tenth control switch and the first connection terminal of the twelfth control switch, wherein
a first equalization phase and a second equalization phase are alternately entered in an equalization process of the equalization circuit; in the first equalization phase, the first control switch, the second control switch, the fifth control switch, the sixth control switch, the ninth control switch, and the tenth control switch are turned on, and the third control switch, the fourth control switch, the seventh control switch, the eighth control switch, the eleventh control switch, and the twelfth control switch are turned off; and in the second equalization phase, the first control switch, the second control switch, the fifth control switch, the ninth control switch, the tenth control switch, and the sixth control switch are turned off, and the third control switch, the fourth control switch, the seventh control switch, the eighth control switch, the eleventh control switch, and the twelfth control switch are turned on.

28. The power supply circuit according to claim 27, wherein
switching frequencies of the first control switch to the twelfth control switch are positively correlated with a voltage difference between the first battery cell and the third battery cell.

29. An electronic device, comprising:
a power supply circuit, wherein the power supply circuit is the power supply circuit according to any one of claims 1-10, or the power supply circuit is the power supply circuit according to any one of claims 11-18, or the power supply circuit is the power supply circuit according to any one of claims 19-28;
a first load; and
a second load.

30. The electronic device according to claim 29, wherein
the electronic device is a laptop.
